(19)

**Europäisches Patentamt**
**European Patent Office**
**Office européen des brevets**

(11)  **EP 4 510 474 A1**

(12)  **EUROPEAN PATENT APPLICATION**
published in accordance with Art. 153(4) EPC

(43) Date of publication:
**19.02.2025 Bulletin 2025/08**

(21) Application number: **23802686.8**

(22) Date of filing: **27.04.2023**

(51) International Patent Classification (IPC):
**H04B 17/382** (2015.01)   **G06N 3/02** (2006.01)
**H04W 48/18** (2009.01)

(52) Cooperative Patent Classification (CPC):
**G06N 3/02; G06N 3/0464; G06N 3/082;**
**H04B 17/382; H04W 48/18**

(86) International application number:
**PCT/CN2023/091408**

(87) International publication number:
**WO 2023/216914 (16.11.2023 Gazette 2023/46)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.05.2022 CN 202210504323**

(71) Applicant: **Huawei Technologies Co., Ltd.**
**Shenzhen, Guangdong 518129 (CN)**

(72) Inventors:
• **HUANGFU, Yourui**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54)  **MEASUREMENT METHOD AND APPARATUS**

(57)     This application provides a measurement method and apparatus, and relates to the communication field, to resolve a problem of low sensing accuracy caused by inaccurate selection of a measurement device in a fusion sensing process. The method includes: A first device obtains a $k^{th}$ first sensing result output by a first sensing neural network. The first sensing neural network is used for a first sensing task, the $k^{th}$ first sensing result is determined based on measurement results of N measurement devices, the N measurement devices are obtained through selection from M measurement devices for k times based on a selection neural network, $1 \le k \le N < M$, and k, M, and N are positive integers. The first device determines that a selection termination condition is not met. The first device selects L measurement devices based on the selection neural network and the $k^{th}$ first sensing result, where $1 \le L < M$, and L is a positive integer. The first device obtains a $(k+1)^{th}$ first sensing result output by the first sensing neural network, where the $(k+1)^{th}$ first sensing result is determined based on measurement results of the N measurement devices and the L measurement devices.

S701: A first device obtains a $k^{th}$ first sensing result output by a first sensing neural network

S702: The first device determines that a selection termination condition is not met

S703: The first device selects L measurement devices based on a selection neural network and the $k^{th}$ first sensing result

S704: The first device obtains a $(k+1)^{th}$ first sensing result output by the first sensing neural network

FIG. 7

**Description**

This application claims priority to Chinese Patent Application No. 202210504323.9, filed with the China National Intellectual Property Administration on May 10, 2022 and entitled "MEASUREMENT METHOD AND APPARATUS", which is incorporated herein by reference in its entirety.

**TECHNICAL FIELD**

This application relates to the communication field, and in particular, to a measurement method and apparatus.

**BACKGROUND**

Sensor fusion (sensor fusion), fusion sensing (fusion sensing), or cooperative sensing (cooperative sensing) is to obtain a more accurate sensing result by using measurement data (or referred to as detection data) of a plurality of measurement devices (such as sensors or detectors). Currently, sensing an environment or an object in a fusion sensing method is a necessary means to improve sensing accuracy.

However, in a fusion sensing process, because there are many optional measurement devices, in a lack of theoretical guidance, measurement devices are usually selected in a random selection manner, and then measurement data of the measurement devices is fused to obtain a sensing result. However, in the random selection manner, there is a lack of an adaptive capability for a specific sensing target, and the selected measurement devices may not be optimal. As a result, improvement of the sensing accuracy is limited, and air interface resources and computing resources are wasted.

**SUMMARY**

This application provides a measurement method and apparatus, to resolve a problem of low sensing accuracy caused by inaccurate selection of a measurement device in a fusion sensing process.

To achieve the foregoing objective, the following technical solutions are used in this application.

According to a first aspect, a measurement method is provided. The method includes: A first device obtains a $k^{th}$ first sensing result output by a first sensing neural network. The first sensing neural network is used for a first sensing task, the $k^{th}$ first sensing result is determined based on measurement results of N measurement devices, the N measurement devices are obtained through selection from M measurement devices for k times based on a selection neural network, $1 \leq k \leq N < M$, and k, M, and N are positive integers. The first device determines that a selection termination condition is not met. The first device selects L measurement devices based on the selection neural network and the $k^{th}$ first sensing result, where $1 \leq L < M$, and L is a positive integer. The first device obtains a $(k+1)^{th}$ first sensing result output by the first sensing neural network, where the $(k+1)^{th}$ first sensing result is determined based on measurement results of the N measurement devices and the L measurement devices.

According to the measurement method in the first aspect, when executing a sensing task, the first device may select a current measurement device based on the selection neural network in combination with a first sensing result output by the first sensing neural network last time, where the first sensing result output by the first sensing neural network last time is obtained through fusion of measurement results of previously selected measurement devices, and a first sensing result obtained through fusion after the current selection is obtained based on measurement results of the currently selected measurement device and the previously selected measurement devices. Therefore, the first device implements incremental selection of the measurement device in an iterative manner based on a first sensing result obtained through each time of selection, so that a measurement result obtained by a measurement device selected each time helps improve the sensing result, and the first sensing result is obtained through fusion of measurement results of the incrementally selected measurement devices, to implement an incremental sensing process. This can not only avoid redundant selection of the measurement device, reduce data transmission and computing resource overheads, and improve sensing efficiency, but also improve sensing accuracy.

In a possible design scheme, the selection neural network is deployed on the first device, and the first sensing neural network is deployed on a second device. Correspondingly, that a first device obtains a $k^{th}$ first sensing result output by a first sensing neural network may include: The first device receives the $k^{th}$ first sensing result from the second device. In this way, the selection neural network and the first sensing neural network may be deployed on different devices, so that the first device can receive the $k^{th}$ first sensing result from the second device. This can implement flexible deployment of the neural network, and applicability is high, so that the first device and the second device cooperate to complete the sensing task with division of labor, and in comparison with that the first device independently completes the sensing task, processing efficiency can be improved.

Further, a measurement device selected by the first device at the $1^{st}$ time is determined based on the selection neural network, information about the M measurement devices, and task information of the first sensing task. In this way, the first device may determine, based on the information about the M measurement devices and the task information of the first sensing task, an initial input of the selection neural network, to start an incremental selection process of the first device for the measurement device, so as to complete the sensing task.

In a possible design scheme, the selection termination condition may include one or more of the following: Accuracy of the $k^{th}$ first sensing result is greater than or equal to an accuracy threshold; or a quantity of times for the first device to select a measurement device is greater than or equal to a quantity threshold of selection times. In this way, the first device may determine, by monitoring the accuracy of the output first sensing result and the quantity of selection times of the measurement device in an incremental sensing process, whether to terminate selection of the measurement device, to implement measurement of the sensing task and improve measurement reliability.

In a possible design scheme, that the first device selects L measurement devices based on the selection neural network and the $k^{th}$ first sensing result may include: The first device obtains an $i^{th}$ second sensing result output by a second sensing neural network. The second sensing neural network is used for a second sensing task, the $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers. The first device selects the L measurement devices based on the selection neural network, the $i^{th}$ second sensing result, and the $k^{th}$ first sensing result. In this way, the first device may complete a plurality of sensing tasks in a coordinated manner, for example, select a measurement device for another sensing task based on a sensing result of one sensing task, to improve sensing accuracy of the another sensing task. It should be noted that there is a specific correlation between two sensing tasks. For example, the first sensing task may be tracking and positioning, and the second sensing task may be environment reconstruction. A sensing result of the tracking and positioning has an auxiliary improvement effect on a sensing result of the environment reconstruction.

In a possible design scheme, the second sensing neural network is deployed on a third device. Correspondingly, that the first device obtains an $i^{th}$ second sensing result output by a second sensing neural network may include: The first device receives the $i^{th}$ second sensing result from the third device. In this way, when the first device completes the plurality of sensing tasks in the coordinated manner, a plurality of sensing neural networks may be deployed on different devices, and the first device may interact with a device on which the sensing neural network is deployed, to complete the plurality of sensing tasks, so as to improve the processing efficiency.

In a possible design scheme, the method according to the first aspect further includes: The first device obtains a $j^{th}$ training sensing result and a $j^{th}$ reference sensing result that are output by a third sensing neural network. The $j^{th}$ training sensing result is determined based on measurement results of Q training measurement devices, the Q training measurement devices are obtained through selection from S training measurement devices for j times based on the selection neural network, the $j^{th}$ reference sensing result is determined based on measurement results of R training measurement devices, the R training measurement devices are obtained through random selection from the S training measurement devices for j times, $1 < j \leq Q < S$, R=Q, and j, Q, R, and S are positive integers. The first device determines that a training termination condition is not met, where the training termination condition is used to terminate training on the selection neural network. The first device selects T training measurement devices based on the selection neural network, the $j^{th}$ training sensing result, and the $j^{th}$ reference sensing result, where $1 \leq T < S$, and T is a positive integer. The first device obtains a $(j+1)^{th}$ training sensing result and a $(j+1)^{th}$ reference sensing result that are output by the third sensing neural network. The $(j+1)^{th}$ training sensing result is determined based on measurement results of the Q training measurement devices and the T training measurement devices, the $(j+1)^{th}$ reference sensing result is determined based on measurement results of the R training measurement devices and P training measurement devices, the P training measurement devices are obtained through random selection from the S training measurement devices at a $(j+1)^{th}$ time, P=T, and P is a positive integer. In this way, the first device may compare a sensing result obtained through selection based on the selection neural network with a sensing result obtained through random selection, and train the selection neural network based on a comparison result, to improve training reliability.

Further, that the first device selects T training measurement devices based on the selection neural network, the $j^{th}$ training sensing result, and the $j^{th}$ reference sensing result may include: The first device determines, based on the $j^{th}$ training sensing result and the $j^{th}$ reference sensing result, a $j^{th}$ reward value used for reinforcement learning, and selects the T training measurement devices based on the selection neural network, the $j^{th}$ training sensing result, and the $j^{th}$ reward value. In this way, the first device trains the selection neural network based on the reinforcement learning, determines, by using a sensing result obtained through the incremental selection and the sensing result obtained through the random selection, a reward value used for reinforcement training, and updates the selection neural network, so that a reward value obtained by using the selection neural network to make a decision (for example, selecting a training measurement device) is larger, to achieve an objective of the training.

Further, that the first device determines, based on the $j^{th}$ training sensing result and the $j^{th}$ reference sensing result, a $j^{th}$ reward value used for reinforcement learning may include: The first device determines, based on a difference between sensing accuracy of the $j^{th}$ training sensing result and sensing accuracy of the $j^{th}$ reference sensing result, the $j^{th}$ reward value used for the reinforcement learning. In this way, the first device may determine, by using a difference between sensing accuracy of a training sensing result and sensing accuracy of a reference sensing result, the reward value used for the reinforcement learning training, to improve the training reliability.

In a possible design scheme, the training termination condition includes one or more of the following: The $j^{th}$ reward value is greater than or equal to a reward value threshold; a quantity of training times of the selection neural network is greater than or equal to a quantity threshold of training times; or a loss value of the selection neural network is less than or equal to a loss value threshold. In this way, the first device may determine, by monitoring the output reward value and the quantity of training times in the incremental sensing process, whether to terminate the training on the selection neural network, to complete the training on the selection neural network and improve the training reliability.

In a possible design scheme, the third sensing neural network is deployed on a fourth device. That the first device obtains a $j^{th}$ training sensing result and a $j^{th}$ reference sensing result that are output by a third sensing neural network includes: The first device receives the $j^{th}$ training sensing result and the $j^{th}$ reference sensing result from the fourth device. In this way, the training on the selection neural network may be performed through interaction between the first device and the second device. A training manner is more flexible and has higher applicability. In addition, the two devices cooperate to complete the training with division of labor, to improve training efficiency.

According to a second aspect, a measurement method is provided. The measurement method includes: A second device receives measurement results from N measurement devices, where a first sensing neural network is deployed on the second device. The first sensing neural network is used for a first sensing task, the N measurement devices are obtained through selection from M measurement devices for k times based on a selection neural network, the selection neural network is deployed on a first device, $1 \leq k \leq N < M$, and k, M, and N are positive integers. The second device obtains a $k^{th}$ first sensing result based on the first sensing neural network and the measurement results of the N measurement devices. The second device sends the $k^{th}$ first sensing result to the first device.

In a possible design scheme, the method according to the second aspect further includes: The second device receives a $k^{th}$ selection result from the first device, where the $k^{th}$ selection result indicates a measurement device selected by the first device at a $k^{th}$ time based on the selection neural network.

According to a third aspect, a measurement apparatus is provided. The measurement apparatus includes a processing module. The processing module is configured to obtain a $k^{th}$ first sensing result output by a first sensing neural network, where the first sensing neural network is used for a first sensing task, the $k^{th}$ first sensing result is determined based on measurement results of N measurement devices, the N measurement devices are obtained through selection from M measurement devices for k times based on a selection neural network, $1 \leq k \leq N < M$, and k, M, and N are positive integers. The processing module is further configured to determine that a selection termination condition is not met. The processing module is further configured to select L measurement devices based on the selection neural network and the $k^{th}$ first sensing result, where $1 \leq L < M$, and L is a positive integer. The processing module is further configured to obtain a $(k+1)^{th}$ first sensing result output by the first sensing neural network, where the $(k+1)^{th}$ first sensing result is determined based on measurement results of the N measurement devices and the L measurement devices.

In a possible design scheme, the selection neural network is deployed on the apparatus, and the first sensing neural network is deployed on a second device. The measurement apparatus according to the third aspect further includes a transceiver module. The transceiver module is configured to receive the $k^{th}$ first sensing result from the second device.

Further, a measurement device selected by the apparatus according to the third aspect at the $1^{st}$ time is determined based on the selection neural network, information about the M measurement devices, and task information of the first sensing task.

In a possible design scheme, the selection termination condition may include one or more of the following: Accuracy of the $k^{th}$ first sensing result is greater than or equal to an accuracy threshold; or a quantity of times for the apparatus according to the third aspect to select a measurement device is greater than or equal to a quantity threshold of selection times.

In a possible design scheme, the processing module is configured to: obtain an $i^{th}$ second sensing result output by a second sensing neural network, where the second sensing neural network is used for a second sensing task, the $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers; and select the L measurement devices based on the selection neural network, the $i^{th}$ second sensing result, and the $k^{th}$ first sensing result.

In a possible design scheme, the second sensing neural network is deployed on a third device. The transceiver module is further configured to receive the $i^{th}$ second sensing result from the third device.

In a possible design scheme, the processing module is configured to obtain a $j^{th}$ training sensing result and a $j^{th}$ reference sensing result that are output by a third sensing neural network, where the $j^{th}$ training sensing result is determined based on measurement results of Q training measurement devices, the Q training measurement devices are obtained through selection from S training measurement devices for j times based on the selection neural network, the $j^{th}$ reference sensing result is determined based on measurement results of R training measurement devices, the R training measurement devices are obtained through random selection from the S training measurement devices for j times,

$1<j≤Q<S$, R=Q, and j, Q, R, and S are positive integers. The processing module is further configured to determine that a training termination condition is not met, where the training termination condition is used to terminate training on the selection neural network. The processing module is further configured to select T training measurement devices based on the selection neural network, the $j^{th}$ training sensing result, and the $j^{th}$ reference sensing result, where $1≤T<S$, and T is a positive integer. The processing module is further configured to obtain a $(j+1)^{th}$ training sensing result and a $(j+1)^{th}$ reference sensing result that are output by the third sensing neural network. The $(j+1)^{th}$ training sensing result is determined based on measurement results of the Q training measurement devices and the T training measurement devices, the $(j+1)^{th}$ reference sensing result is determined based on measurement results of the R training measurement devices and P training measurement devices, the P training measurement devices are obtained through random selection from the S training measurement devices at a $(j+1)^{th}$ time, P=T, and P is a positive integer.

Further, the processing module is configured to: determine, based on the $j^{th}$ training sensing result and the $j^{th}$ reference sensing result, a $j^{th}$ reward value used for reinforcement learning; and select the T training measurement devices based on the selection neural network, the $j^{th}$ training sensing result, and the $j^{th}$ reward value.

Further, the processing module is configured to determine, based on a difference between sensing accuracy of the $j^{th}$ training sensing result and sensing accuracy of the $j^{th}$ reference sensing result, the $j^{th}$ reward value used for the reinforcement learning.

In a possible design scheme, the training termination condition may include one or more of the following: The $j^{th}$ reward value is greater than or equal to a reward value threshold; a quantity of training times of the selection neural network is greater than or equal to a quantity threshold of training times; or a loss value of the selection neural network is less than or equal to a loss value threshold.

In a possible design scheme, the third sensing neural network is deployed on a fourth device. The transceiver module is configured to receive the $j^{th}$ training sensing result and the $j^{th}$ reference sensing result from the fourth device.

Optionally, the transceiver module may include a receiving module and a sending module. The sending module is configured to implement a sending function of the apparatus according to the third aspect, and the receiving module is configured to implement a receiving function of the apparatus according to the third aspect.

Optionally, the apparatus according to the third aspect may further include a storage module, and the storage module stores a program or instructions. When the processing module executes the program or the instructions, the communication apparatus according to the third aspect is enabled to perform the method according to the first aspect.

It should be noted that the apparatus according to the third aspect may be a terminal device or a network device, may be a chip (system) or another component or assembly that may be disposed in a terminal device or a network device, or may be an apparatus that includes a terminal device or a network device. This is not limited in this application.

According to a fourth aspect, a measurement apparatus is provided. The measurement apparatus includes a transceiver module and a processing module. The transceiver module is configured to receive measurement results from N measurement devices, where a first sensing neural network is deployed on the apparatus. The first sensing neural network is used for a first sensing task, the N measurement devices are obtained through selection from M measurement devices for k times based on a selection neural network, the selection neural network is deployed on a first device, $1≤k≤N<M$, and k, M, and N are positive integers. The processing module is configured to obtain a $k^{th}$ first sensing result based on the first sensing neural network and the measurement results of the N measurement devices. The transceiver module is further configured to send, by a second device, the $k^{th}$ first sensing result to the first device.

In a possible design scheme, the transceiver module is configured to receive a $k^{th}$ selection result from the first device, where the $k^{th}$ selection result indicates a measurement device selected by the first device at a $k^{th}$ time based on the selection neural network.

Optionally, the transceiver module may include a receiving module and a sending module. The sending module is configured to implement a sending function of the apparatus according to the fourth aspect, and the receiving module is configured to implement a receiving function of the apparatus according to the fourth aspect.

Optionally, the apparatus according to the fourth aspect may further include a storage module, and the storage module stores a program or instructions. When the processing module executes the program or the instructions, the communication apparatus according to the fourth aspect is enabled to perform the method according to the second aspect.

It should be noted that the apparatus according to the fourth aspect may be a terminal device or a network device, may be a chip (system) or another component or assembly that may be disposed in a terminal device or a network device, or may be an apparatus that includes a terminal device or a network device. This is not limited in this application.

According to a fifth aspect, a measurement apparatus is provided, and includes a processor and a memory. The memory is configured to store a computer program. When the processor executes the computer program, the apparatus is enabled to perform the measurement method according to any one of the implementations of the first aspect and the second aspect.

In a possible design scheme, the apparatus according to the fifth aspect may further include a transceiver. The transceiver may be a transceiver circuit or an interface circuit. The transceiver may be used by the apparatus according to the fifth aspect to communicate with another communication apparatus.

In this application, the apparatus according to the fifth aspect may be the first device or the second device in the first aspect or the second aspect, a chip (system) or another component or assembly that may be disposed in the first device or the second device, or an apparatus that includes the first device or the second device.

In addition, for technical effects of the apparatuses according to the third aspect to the fifth aspect, refer to technical effects of the measurement method according to the first aspect. Details are not described herein again.

According to a sixth aspect, a communication system is provided. The communication system includes a first device and a second device. Optionally, a third device may be further included.

According to a seventh aspect, a computer-readable storage medium is provided, and includes a computer program or instructions. When the computer program or the instructions are run on a computer, the computer is enabled to perform the measurement method according to any one of the possible implementations of the first aspect and the second aspect.

According to an eighth aspect, a computer program product is provided, and includes a computer program or instructions. When the computer program or the instructions are run on a computer, the computer is enabled to perform the measurement method according to any one of the possible implementations of the first aspect and the second aspect.

## BRIEF DESCRIPTION OF DRAWINGS

FIG. 1 is a diagram of an architecture of a sensing measurement system according to an embodiment of this application;

FIG. 2 is a diagram of a sensing scenario according to an embodiment of this application;

FIG. 3 is a schematic flowchart 1 of a training method of a selection neural network according to an embodiment of this application;

FIG. 4A and FIG. 4B are a schematic flowchart 2 of a training method of a selection neural network according to an embodiment of this application;

FIG. 5 is a diagram of a structure of deep reinforcement learning according to an embodiment of this application;

FIG. 6 is a diagram of a structure of loss value calculation of a sensing neural network according to an embodiment of this application;

FIG. 7 is a schematic flowchart 1 of a measurement method according to an embodiment of this application;

FIG. 8 is a diagram of a structure of fusion processing of a first sensing neural network according to an embodiment of this application;

FIG. 9 is a diagram of a structure of processing of a selection neural network according to an embodiment of this application;

FIG. 10 is a schematic flowchart 2 of a measurement method according to an embodiment of this application;

FIG. 11 is a schematic flowchart 3 of a measurement method according to an embodiment of this application;

FIG. 12 is a schematic flowchart 4 of a measurement method according to an embodiment of this application;

FIG. 13 is a diagram of comparison between first sensing results and reference sensing results according to an embodiment of this application;

FIG. 14 is a line graph of loss value changes of a first sensing result and a reference sensing result according to an embodiment of this application;

FIG. 15 is a diagram 1 of a structure of a measurement apparatus according to an embodiment of this application; and

FIG. 16 is a diagram 2 of a structure of a measurement apparatus according to an embodiment of this application.

## DESCRIPTION OF EMBODIMENTS

The following describes technical terms in embodiments of this application.

1. A deep neural network (deep neural network, DNN) is a basis of deep learning. The DNN includes an input layer, an output layer, and a hidden layer between the input layer and the output layer. The hidden layer may include one or more layers, and the hidden layer may have a non-linear activation function, for example, a rectified linear unit (rectified linear unit, ReLU) function or a hyperbolic tangent (tanh) function. Layers in the DNN are connected to each other via a node at each layer. A pair of connected nodes have one weight value and one bias value. The DNN may be considered as non-linear transformation from an input to an output. A loss of the output may be calculated by using a loss function (loss function), a generated gradient may be transmitted from the output layer to the input layer for calculation by using a back-propagation (back-propagation, BP) algorithm, and then a weight and a bias of each layer of network are updated according to an optimizer algorithm, to minimize the loss. The optimizer algorithm may be stochastic gradient descent (stochastic gradient descent, SGD), stochastic gradient ascent (stochastic gradient ascent, SGA), adaptive moment estimation (adaptive moment estimation, Adam), or the like.

2. Reinforcement learning (reinforcement learning, RL) is a process in which an agent (agent) interacts with an environment to learn an optimal policy in a trial-and-error (or referred to as exploration) manner. The reinforcement learning can provide a solution for a problem that needs a series of decisions, especially a problem on which theoretical modeling cannot be performed or that is difficult to resolve.

A reinforcement learning system includes concepts such as a state (or referred to as an observation), a policy, a return, a time step, an episode, and a value function. The state is information obtained by the agent from the environment. The policy is used by the agent to determine a next action based on the state, that is, mapping from the state to the action. The return may also be referred to as a reward (reward), and is a value fed back by the environment after the agent takes an action in the environment. A time step is a process from performing an action by the agent to feeding back a return by the environment. In a process of optimizing a problem through the reinforcement learning, a unit of episode may be used. Each episode includes a plurality of time steps. The environment may feed back a return only when an episode ends, or may feed back a return when an episode does not end. It should be noted that different environments have different feedback manners.

An objective of the agent is to maximize a total return of each episode. The value function is used to evaluate an expected return of a policy. An input thereof may be the state or may be a combination of the state and the action. An output value indicates a value estimated by the agent for a total return that may be accumulated in the future, and a larger output value indicates that a currently selected action is better in the long run.

3. Deep reinforcement learning (deep reinforcement learning, DRL) is a combined application of the deep neural network and the reinforcement learning. The DRL still complies with a framework of the interaction between the agent and the environment in the reinforcement learning. A difference is that in the DRL, the agent uses the deep neural network to make a decision.

In the deep reinforcement learning, a value function may also be represented by the deep neural network. An input of the value function is an input of the deep neural network, and an output of the value function is an output of the deep neural network. In this way, the value function may also be used in a training process of the deep neural network. A deep neural network representing the value function is referred to as a value network, and a deep neural network representing an output action is referred to as a policy network. The value network may assist in updating the policy network in a gradient method for reducing a policy gradient. A policy gradient algorithm may maximize an expected total return by continuously estimating the gradient.

The following briefly describes a conventional technology.

Currently, in a fusion sensing process, because there are many optional measurement devices, when measurement results of measurement devices are selected as fusion sensing data, in a lack of theoretical guidance, the measurement devices are usually selected in a random selection manner, and then measurement data of the measurement devices is fused to obtain a sensing result. However, in the random selection manner, there is a lack of an adaptive capability for a specific sensing target, and the selected measurement devices may not be optimal. Not all measurement data measured by each measurement device can improve the sensing result. As a result, improvement of sensing accuracy is limited, causing insufficient accuracy of the sensing result, and air interface resources and computing resources are wasted.

Therefore, embodiments of this application provide a measurement method, to implement incremental selection of a measurement device in an iterative manner in combination with a neural network, so as to resolve a problem of low sensing accuracy caused by a lack of guidance for measurement device selection in a fusion sensing process.

The following describes technical solutions in this application with reference to accompanying drawings.

The technical solutions in embodiments of this application may be applied to any scenario/communication system that needs fusion sensing, including a wired communication system and a wireless communication system, for example, a wireless hotspot (Wi-Fi) system, a cellular network system, a satellite communication system, an uncrewed aerial vehicle communication system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

For ease of clearly describing the technical solutions in embodiments of this application, terms such as "first" and "second" are used in embodiments of this application to distinguish between same items or similar items that have basically same functions and purposes. For example, a first device and a second device are merely used to distinguish between different devices, and do not limit a sequence thereof. A person skilled in the art may understand that the terms such as "first" and "second" do not limit a quantity or an execution sequence, and the terms such as "first" and "second" do not indicate a definite difference.

All aspects, embodiments, or features are presented in this application by describing a system that may include a plurality of devices, assemblies, modules, and the like. It should be appreciated and understood that, each system may include another device, assembly, module, and the like, and/or may not include all devices, assemblies, modules, and the like discussed with reference to the accompanying drawings. In addition, a combination of these solutions may be used.

In addition, in embodiments of this application, words such as "example" and "for example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

In embodiments of this application, terms such as "information (information)", a "signal (signal)", a "message (message)", a "channel (channel)", and "signaling (signaling)" may sometimes be interchangeably used. It should be noted that expressed meanings thereof are consistent when differences thereof are not emphasized. Terms such as "of (of)", "corresponding (corresponding, relevant)", and corresponding (corresponding) may sometimes be interchangeably used. It should be noted that expressed meanings thereof are consistent when differences thereof are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

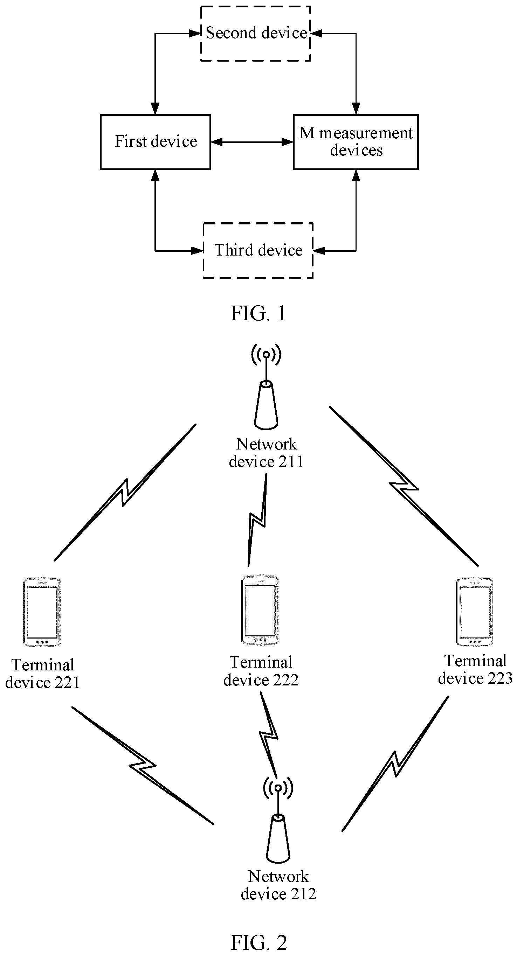

For ease of understanding embodiments of this application, a sensing measurement system shown in FIG. 1 is first used as an example to describe in detail a system applicable to embodiments of this application. For example, FIG. 1 is a diagram of an architecture of a sensing measurement system according to an embodiment of this application, and is applicable to any communication system that needs fusion sensing.

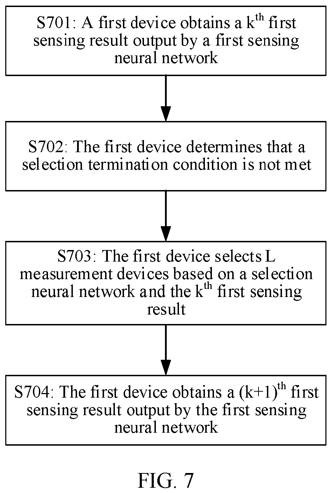

As shown in FIG. 1, the sensing measurement system includes a first device and M measurement devices. The first device may communicate with the M measurement devices, where M>1, and M is a positive integer. A selection neural network and a first sensing neural network may be deployed on the first device. The first device may complete a first sensing task based on the selection neural network and the first sensing neural network. The selection neural network may be used to select a measurement device. The first sensing neural network may be used for fusion calculation performed on measurement results of measurement devices, to obtain a first sensing result. For a specific process of implementing the first sensing task, refer to the following method embodiments shown in FIG. 7 to FIG. 12. Details are not described herein again.

It may be understood that the selection neural network and the sensing neural network may be deep neural networks.

In the sensing measurement system, the M measurement devices may be devices for measuring a radio wave, or may be device components or configurations related to measuring a radio wave. For example, the M measurement devices may be M antennas or antenna arrays distributed at a specific distance, may be M usable measurement bands, may be M beam directions, or may be M selectable precoding (precoding) codebooks (codebooks). A measurement result of each measurement device may be measurement data related to the radio wave, for example, a signal to noise ratio (signal to noise ratio, SNR), a received signal strength indicator (received signal strength indicator, RSSI), channel state information (channel state information, CSI), a channel frequency response (channel frequency response, CFR), a channel impulse response (channel impulse response, CIR), or radar measurement data, may be other data that can be measured by a radio wave transceiver device, or may be data obtained by performing further processing such as statistics collection and analysis on one or more pieces of the foregoing measurement data.

The M measurement devices may be measurement devices having a same function, may be measurement devices having different functions, or may include a part of measurement devices having a same function and a part of measurement devices having different functions. Further, the M measurement devices may be deployed at different locations of a same device, or may be deployed on different devices.

In addition, data types of the measurement results fused via the first sensing neural network may be the same or may be different. For example, in the wireless communication system, the measurement results fused via the first sensing neural network may be cross-layer (cross-layer), where for example, data at protocol layers such as a physical layer (physical layer, PHY), a media access control (media access control, MAC) layer, and an application (application, APP) layer may be fused; may be cross-device (cross-device), where for example, data of devices such as a camera, a mobile phone, an uncrewed aerial vehicle, a satellite, a shipborne device, a vehicle-mounted device, and internet of things (internet of things, IoT) may be fused; or may be cross-sensor (cross-sensor), where for example, data of sensors such as a Wi-Fi transceiver, a transceiver with different frequency bands, a 5G transceiver, a Bluetooth transceiver, a global positioning system (global positioning system, GPS) transceiver, an accelerometer, a photosensitive element, and a magnetometer may be fused.

It may be understood that, for different sensing tasks, measurement results processed by the first device through fusion are different, and a sensing result of a same sensing task may be obtained through fusion of measurement results of different types.

Optionally, the sensing measurement system may further include a second device, and the first sensing neural network may alternatively be deployed on the second device. In other words, the selection neural network and the first sensing neural network may be respectively deployed on different devices, and the first sensing task may be jointly completed by the first device and the second device.

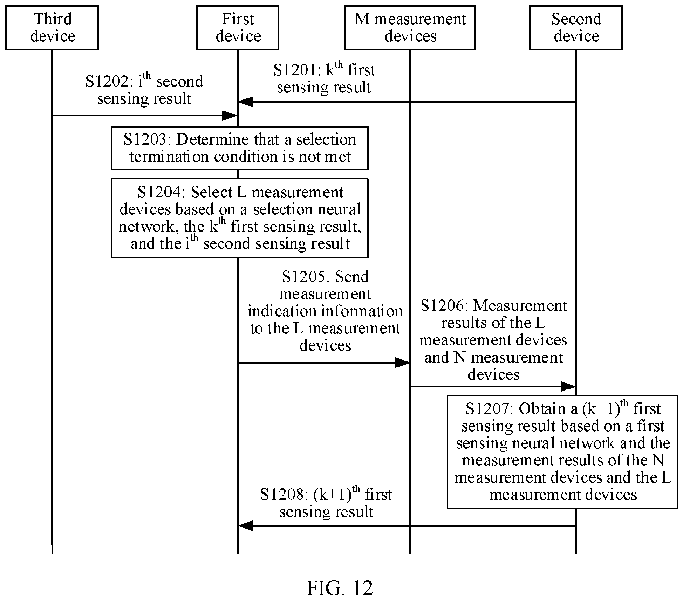

Optionally, the sensing measurement system may further include a third device, where a second sensing neural network is deployed on the third device, and the second sensing neural network is used for a second sensing task. In this case, in the sensing measurement system shown in FIG. 1, the first device may coordinate a plurality of sensing tasks. For example, the first device may select measurement devices for the first sensing task based on the selection neural network. The second device fuses measurement results of the selected measurement devices based on the first sensing neural network, to obtain the first sensing result. The first device selects measurement devices for the second sensing task based on the selection neural network by using the first sensing result. The third device then obtains a second sensing result based on measurement results of the measurement devices selected by the first device. For the two sensing tasks, the first device alternately selects the measurement devices, to improve sensing accuracy. For details, refer to the following method embodiment shown in FIG. 12. Details are not described herein again.

It should be noted that there is a specific correlation between the plurality of sensing tasks coordinated by the first device. For example, the first sensing task may be environment reconstruction, and the second sensing task may be tracking and positioning. A sensing result of the tracking and positioning has an auxiliary improvement effect on a sensing result of the environment reconstruction.

It may be understood that a structure of the first sensing neural network is similar to that of the second sensing neural network. An input thereof may be information about the selected measurement devices and the measurement results, and an output may be the sensing result obtained through fusion processing. Based on different sensing tasks, parameter settings of the two sensing neural networks may be different. A parameter of the sensing neural network may be specifically set based on different application scenarios. This is not limited herein. The parameter of the sensing neural network may include a weight, a bias, and the like.

In addition, the first sensing task and the second sensing task may be sensing an environment or an object in the environment. For example, the first sensing task and the second sensing task may be the environment reconstruction, the tracking and positioning, determining whether there is a person in the environment, gesture or posture recognition, or the like.

The first sensing result and the second sensing result may be determining or descriptions of one or more of a physical attribute (for example, a shape, a contour, or a material), a location, a state (for example, a posture), a state change, and existence of the object in the environment based on the measurement results of the measurement devices, for example, determining whether there is the person in the environment, describing the object in the current environment in a manner of drawing, imaging, or the like, recognizing a gesture or a posture of the person, or high-accuracy tracking and positioning.

In some embodiments, the first device, the second device, and the measurement device each may be a network device, may be a chip (system) or another component or assembly disposed in a network device, or may be an apparatus that includes a network device.

In some other embodiments, the first device, the second device, and the measurement device each may alternatively be a terminal device, may be a chip (system) or another component or assembly disposed in a terminal device, or may be an apparatus that includes a terminal device.

It should be understood that FIG. 1 is merely a simplified diagram of an example for ease of understanding. The system may further include another network device and/or another terminal device, which are/is not shown in FIG. 1.

For example, FIG. 2 is a diagram of a sensing scenario according to an embodiment of this application. The sensing measurement system shown in FIG. 1 is applicable to the sensing scenario. As shown in FIG. 2, the sensing scenario may include one or more network devices and one or more terminal devices. Any terminal device may communicate with any network device, and any two terminal devices or any two network devices may also communicate with each other. FIG. 2 shows an example of two network devices (a network device 211 and a network device 212) and three terminal devices (a terminal device 221, a terminal device 222, and a terminal device 223). A quantity of terminal devices and a quantity of network devices are not limited in this embodiment of this application, and may be determined based on different application scenarios.

For example, when a sensing task of environment reconstruction is completed in the scenario shown in FIG. 2, the first device, the second device, or the third device shown in FIG. 1 may be any network device or terminal device in FIG. 2, the M measurement devices may be all terminal devices and network devices included in the scenario, the terminal device and/or the network device in the scenario may measure channel state information, and the first device may perform fusion sensing based on the measured channel state information to complete the sensing task.

The network device includes but is not limited to: an access point (access point, AP) in a wireless hotspot (Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or a transmission point, TP), or the like. Alternatively, the network device may be a gNB or a transmission point (TRP or TP) in a 5G system, for example, a new radio (new radio, NR) system, or one antenna panel or a group of antenna panels (including a plurality of antenna panels) of a base station in a 5G system; or may be a network node that constitutes a gNB or a transmission point, for example, a baseband unit (BBU), a distributed unit (distributed unit, DU), or a road side unit (road side unit, RSU) having a base station function.

The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a pad (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, an RSU having a terminal function, or the like. The terminal device in this application may alternatively be a vehicle-mounted module, a vehicle-mounted component, a vehicle-mounted chip, or an on-board unit that is built in a vehicle as one or more components or units. The vehicle may implement the measurement method provided in this application through the built-in vehicle-mounted module, vehicle-mounted component, vehicle-mounted chip, or on-board unit.

It should be noted that the measurement method provided in embodiments of this application is applicable between any two nodes shown in FIG. 1, for example, between the first device and the second device, or is applicable between any two nodes shown in FIG. 2, for example, between the network device and the terminal device. For specific implementation, refer to the following method embodiments. Details are not described herein again.

It should be understood that FIG. 1 and FIG. 2 are merely simplified diagrams of examples for ease of understanding. The communication system may further include another network device and/or another terminal device, which are/is not shown in FIG. 1 and FIG. 2.

It should be noted that the foregoing selection neural network, first sensing neural network, and second sensing neural network are obtained through training. The first sensing neural network or the second sensing neural network may be obtained through training based on supervised learning by using a random selection policy by the first device, the second device, or the third device shown in FIG. 1, that is, the first sensing neural network or the second sensing neural network may be obtained through iterative training by using a measurement result of a randomly selected training measurement device.

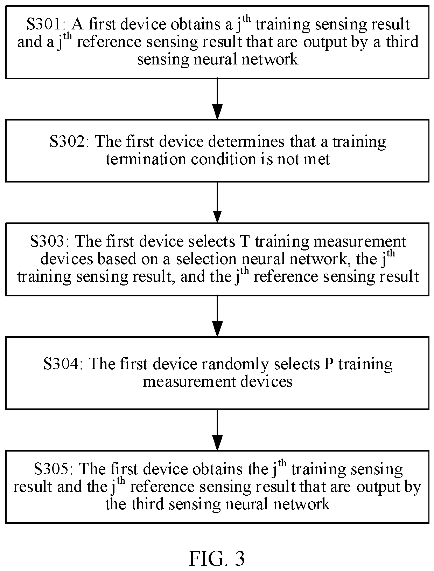

The following specifically describes, with reference to FIG. 3 to FIG. 14, the measurement method provided in embodiments of this application.

The measurement method provided in embodiments of this application is implemented by the first device based on the selection neural network and the sensing neural network. Before the measurement method is implemented, a training process of the selection neural network in embodiments of this application is first described, and the sensing neural network may be obtained through independent training by using a measurement result of a randomly selected training measurement device. For details, refer to a related existing implementation. Therefore, no specific description is provided.

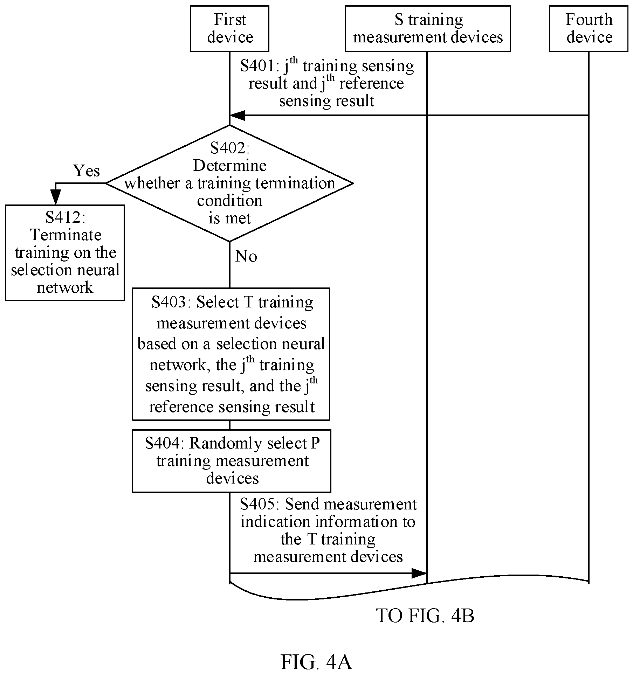

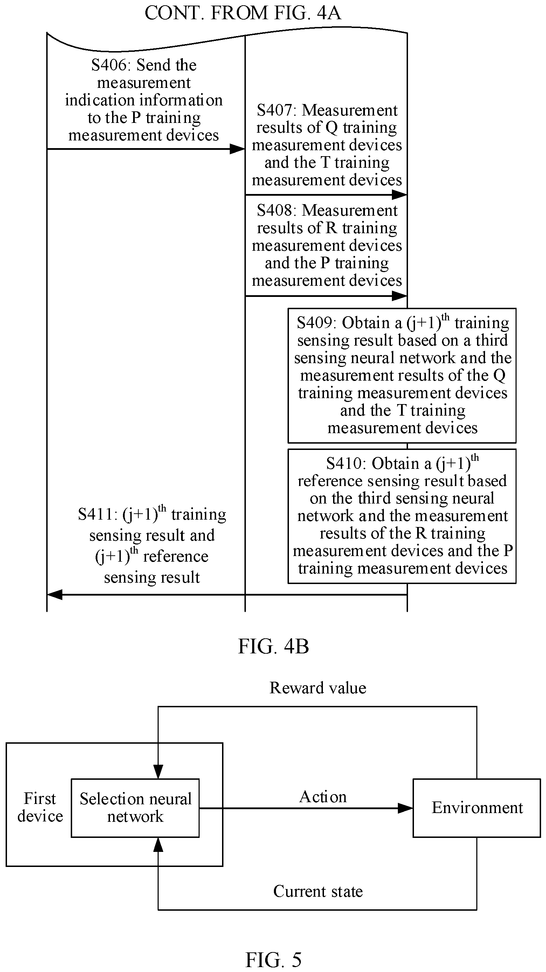

Because the selection neural network needs a sensing result of the sensing neural network as an input for iterative training, the selection neural network cannot be obtained through independent training. Therefore, the selection neural network may be obtained through training by the first device shown in FIG. 1, may be obtained through joint training by the first device and the second device, or may be obtained through joint training by the first device and the third device. In embodiments of this application, the selection neural network may be obtained through training in a reinforcement learning method in combination with the sensing neural network. For details, refer to the following training methods of the selection neural network shown in FIG. 3 and FIG. 4A and FIG. 4B, to implement measurement methods shown in FIG. 7 to FIG. 12.

It should be noted that the "training measurement device" and a "training sensing task" described in embodiments of this application may represent a measurement device and a sensing task that are used to complete the training on the selection neural network. The training sensing task may be a sensing task that has been executed, and a corresponding training measurement device is a measurement device configured to complete the training sensing task. A "training sensing result" and a "reference sensing result" may represent sensing results obtained based on the training on the selection neural network. The "first sensing task" and the "second sensing task" may represent sensing tasks implemented by using the measurement method provided in embodiments of this application. The measurement method provided in embodiments of this application is implemented based on a trained selection neural network. The "measurement device" may represent a measurement device configured to complete the first sensing task and/or the second sensing task. Based on a sensing task of a same type, an information type of the training measurement device may be similar to an information type of the measurement device. For details, refer to related descriptions of the information about the measurement device. A type of the measurement result of the training measurement device may also be similar to a type of the measurement result of the measurement device. For details, refer to related descriptions of the measurement result of the measurement device.

Specifically, FIG. 3 is a schematic flowchart 1 of a training method of a selection neural network according to an embodiment of this application. A training process of the selection neural network may be applied to the first device shown in FIG. 1, and the selection neural network is obtained through independent training by the first device; may be applied to the first device and the second device shown in FIG. 1, and the selection neural network is obtained through joint training by the first device and the second device; or may be applied to the first device and the third device, and the selection neural network is obtained through joint training by the first device and the third device. Specifically, the first device may be any network device shown in FIG. 2, or may be any terminal device. This is not limited.

As shown in FIG. 3, the training method of the selection neural network includes the following steps.

S301: The first device obtains a $j^{th}$ training sensing result and a $j^{th}$ reference sensing result that are output by a third sensing neural network.

The third sensing neural network may be a first sensing neural network deployed on the first device or the second device shown in FIG. 1, may be a second sensing neural network deployed on the third device, or may be a neural network that is deployed on another device and that has a structure similar to that of the first sensing neural network and the second sensing neural network. Based on different scenarios, different sensing tasks, and the like, parameter (for example, a weight or a bias) settings of the first sensing neural network, the second sensing neural network, and the third sensing neural network may be different.

It should be noted that when the first device trains the selection neural network in combination with the third sensing neural network, the third sensing neural network may be obtained through pre-training based on supervised learning according to a random selection policy.

Specifically, the $j^{th}$ training sensing result is determined based on information about and measurement results of Q training measurement devices. For example, the first device may obtain the $j^{th}$ training sensing result based on the third sensing neural network and the information about and the measurement results of the Q training measurement devices. The Q training measurement devices may be obtained by the first device through selection from S training measurement devices for j times based on the selection neural network, and one or more training measurement devices may be selected at a time, where j may be a quantity of times of selecting a training measurement device or a quantity of selection times of the training measurement device, $1 \leq j \leq Q < S$, j, Q, and S are positive integers. The selection neural network may be deployed on the first device.

In a process in which the first device selects the training measurement device from the S training measurement devices for j times based on the selection neural network, when the first device performs the 1st time of selection (or referred to as first selection or initial selection) based on the selection neural network, the first device may obtain a training sensing task and information about the S training measurement devices, perform initialization based on the training sensing task and the information about the S training measurement devices to obtain an initial training sensing result, and then use the initial training sensing result and the information about the S training measurement devices as inputs of the selection neural network, to obtain the 1st training selection result output by the selection neural network. The 1st training selection result may be used by the first device to select one or more training measurement devices from the S training measurement devices at the 1st time. The process may be referred to as the 1st time of selection performed by the first device based on the selection neural network. The information about the S training measurement devices may be information that helps select the training measurement device, such as identification information, location information, and state information of the training measurement device. The information about the S training measurement devices may be sent by the training measurement device to the first device.

For example, in the scenario shown in FIG. 2, when the first device trains the selection neural network by using environment reconstruction as a training sensing task, the S training measurement devices may include all network devices and terminal devices in a current training environment. For example, a quantity of training measurement devices that may be configured to complete the environment reconstruction is S. In this case, the first device may determine the initial training sensing result based on the training sensing task (for example, the environment reconstruction) and the information about the S training measurement devices (for example, information about the network device and/or the terminal device). The information about the S training measurement devices may include location information and identification information of each network device and/or terminal device.

For example, the initial training sensing result obtained by the first device may be a blank image. When performing the 1st time of selection, the first device inputs the blank image and the information about the S training measurement devices into the selection neural network, and a result (for example, the 1st training selection result) for selecting the training measurement device at the 1st time is output, thereby implementing the 1st time of selection of the training measurement device.

It should be noted that the selection neural network may be a multi-output structure. A training selection result output by the selection neural network may include a plurality of output values. One output value indicates a probability that one training measurement device is selected. A sum of probabilities that all training measurement devices that can be selected are selected is 1. The first device may select, based on probability distribution sampling, one or more training measurement devices for measurement. For example, when the first device performs the 1st time of selection, the training selection result output by the selection neural network includes S values, and the S values correspond to probabilities that the S training measurement devices are selected. Based on a probability that each training measurement device is selected, the first device may select one or more training measurement devices from the S training measurement devices based on the probability distribution sampling. After the training is completed, in an actual use process of the selection neural network, the first device selects a measurement device in descending order based on a probability that each measurement device is selected, and selects previous one or more measurement devices with a high probability from measurement devices.

Further, the third sensing neural network obtains the 1st training sensing result based on information about and a measurement result of the training measurement device selected by the first device at the 1st time. Specifically, in the scenario shown in FIG. 2, the training sensing task is the environment reconstruction. The measurement result of the training measurement device selected at the 1st time may be channel measurement data. The third sensing neural network may perform fusion processing on the information (for example, location information of a network device/terminal device) about and the measurement result (for example, the channel measurement data) of the training measurement device selected at the 1st time, to obtain the 1st training sensing result as an input for the 2nd time of selection performed by the first device based on the selection neural network.

It may be understood that a process in which the third sensing neural network processes the information about and the measurement result of the selected training measurement device may be a process of performing feature extraction, feature fusion, or the like on input data. For details, refer to an existing implementation process. Details are not described herein again.

When the quantity of selection times of the training measurement device is greater than 1, that is, j>1, subsequently, for a jth time of selection, fusion processing may be performed, by using the sensing neural network, on information about and a measurement result of a training measurement device that has been selected for j-1 times, to obtain a (j-1)th training sensing result, the (j-1)th training sensing result is used as an input of the selection neural network, to obtain a jth training selection result corresponding to the jth time of selection, and then one or more training measurement devices corresponding to the jth time of selection are determined based on the jth training selection result. In other words, each time the first device selects a training measurement device based on the selection neural network, a training sensing result currently output by the third sensing neural network may be used as an input for next selection performed by the selection neural network.

For example, j=4. When the 2nd time of selection is performed, fusion processing is performed, by using the third sensing neural network, on the information about and the measurement result of the training measurement device selected at the 1st time, to obtain the 1st training sensing result, the 1st training sensing result is used as the input of the selection neural network to obtain the 1st training selection result, and then one or more training measurement devices are determined based on the 1st training selection result. The process is the 2nd time of selection process. Similarly, for the 3rd time of selection, fusion processing is performed, by using the third sensing neural network, on information about and measurement results of the training measurement devices selected at the 1st time and the 2nd time, to obtain the 2nd training sensing result, the 2nd training sensing result is used as an input of the selection neural network to obtain the 3rd training selection result, and then one or more training measurement devices are determined based on the 3rd training selection result. The process is the 3rd time of selection process. Similarly, for the 4th time of selection, fusion processing is performed, by using the third sensing neural network, on information about and measurement results of the training measurement devices selected at the 1st time, the 2nd time, and the 3rd time, to obtain the 3rd training sensing result, the 3rd training sensing result is used as an input of the selection neural network to obtain the 4th training selection result, and then one or more training measurement devices are determined based on the 4th training selection result. The process is the 4th time of selection process. For a specific process in which the first device selects the training measurement device each time, refer to the following process in which the first device performs a (j+1)th time of selection based on the selection neural network in S302 to S305. Details are not described herein again.

It may be understood that a process in which the first device processes input data (for example, the initial training sensing result and the information about the S training measurement devices) based on the selection neural network may be a processing process of performing feature extraction, feature compression, dimension reduction, normalization, or the like on the input data, for example, a process of converting an input and an output into feature vectors for calculation. For details, refer to the existing implementation process. Details are not described herein again.

In addition, the foregoing jth reference sensing result may be determined based on measurement results of R training measurement devices, and the R training measurement devices may be obtained by the first device through random selection from the S training measurement devices for j times. In other words, a reference sensing result is obtained based on a measurement result of a randomly selected training measurement device. It may be understood that a process of obtaining the reference sensing result by using the third sensing neural network is similar to a process of obtaining the training sensing result. Details are not described again.

R=Q, and R is a positive integer. To be specific, a quantity of training measurement devices randomly selected by the first device each time is equal to a quantity of training measurement devices selected by the first device each time by using the selection neural network. In other words, a total quantity of training measurement devices obtained by the first device through random selection for j times is equal to a total quantity of training measurement devices obtained by the first device through selection for j times based on the selection neural network. In this way, fair comparison between the $j^{th}$ training sensing result and the $j^{th}$ reference sensing result can be implemented, thereby improving accuracy of the training on the selection neural network. It should be noted that the first device may randomly select the training measurement device according to the random selection policy. For example, the first device may perform random sorting based on identifiers of training measurement devices, and select a training measurement device that ranks highly.

It may be understood that the first device trains the selection neural network based on the training sensing task, and a completion status of the training sensing task may be represented by the training sensing result and the reference sensing result that are output by the third sensing neural network. For example, the training sensing task is the environment reconstruction, and the training sensing result and the reference sensing result may be environment reconstruction images output by the third sensing neural network.

In a possible design scheme, the third sensing neural network and the selection neural network may be deployed on a same device. For example, the third sensing neural network is also deployed on the first device. In this case, the first device may locally obtain an output result (the $j^{th}$ training sensing result and the $j^{th}$ reference sensing result) of the third sensing neural network. Specifically, the first device may obtain the $j^{th}$ training sensing result based on the third sensing neural network and the information about and the measurement results of the Q training measurement devices, and the first device may obtain the $j^{th}$ reference sensing result based on the third sensing neural network and information about and the measurement results of the R training measurement devices.

In another possible design scheme, the third sensing neural network and the selection neural network may be separately deployed. For example, the third sensing neural network is deployed on a fourth device. In this case, the first device may receive the $j^{th}$ training sensing result and the $j^{th}$ reference sensing result from the fourth device. The fourth device may obtain the $j^{th}$ training sensing result based on the third sensing neural network and the information about and the measurement results of the Q training measurement devices, and the fourth device may obtain the $j^{th}$ reference sensing result based on the third sensing neural network and information about and the measurement results of the R training measurement devices. For details, refer to the following training method shown in FIG. 4A and FIG. 4B. Details are not described herein again.

It should be noted that the fourth device may be the second device or the third device shown in FIG. 1, or may be another device not shown in FIG. 1.

S302: The first device determines that a training termination condition is not met.

The training termination condition is used to terminate the training on the selection neural network. The training termination condition may include one or more of the following:

Condition 1-1: A $j^{th}$ reward value is greater than or equal to a reward value threshold.

The $j^{th}$ reward value is used for reinforcement learning training. The $j^{th}$ reward value may be determined based on a difference between sensing accuracy of the $j^{th}$ training sensing result and sensing accuracy of the $j^{th}$ reference sensing result. The sensing accuracy of the $j^{th}$ training sensing result is obtained by comparing the $j^{th}$ training sensing result with a real sensing result. The real sensing result may be an actual structure, state, or the like of a to-be-sensed object or environment. The sensing accuracy of the $j^{th}$ reference sensing result is obtained by comparing the $j^{th}$ reference sensing result with the real sensing result. For example, the training sensing task is the environment reconstruction, the real sensing result may be a real image of a to-be-reconstructed environment, and the $j^{th}$ training sensing result and the $j^{th}$ reference sensing result may be sensing images corresponding to the environment reconstruction. The real image is separately compared with the two sensing images, so that corresponding sensing accuracy can be obtained through calculation, to obtain the $j^{th}$ reward value.

For example, a process in which the real image is compared with the sensing image to obtain the sensing accuracy through calculation may be subtracting a grayscale value of each pixel of the real image from a grayscale value of each pixel of the sensing image, taking an absolute value, and then averaging absolute values, to obtain a bias value between the two images. A smaller bias value indicates higher sensing accuracy. When grayscale values in an image have an obvious bimodal distribution or multimodal distribution, a bias value may be calculated for grayscale values near each peak, and then averaging may be performed on various peaks. In this way, training overfitting caused by an uneven distribution of the grayscale values can be avoided.

The bimodal distribution may be polarization of grayscale values of the real image. For example, grayscale values of a real image are normalized to 0 to 1, and it is found that the grayscale values are mainly distributed near 0 and 1. In this case, a bias value a may be obtained through calculation for pixels near 0, and a bias value b may be obtained through calculation for pixels near 1. Finally, an overall bias value a+b is obtained. It is assumed that there are 10,000 pixels near 0 and only 100 pixels near 1. In this calculation manner, a case in which a neural network over-optimizes the pixels near 0 can be avoided, and the pixels near 0 and 1 can be fairly and synchronously optimized. It is equivalent to adding a weight to a bias value of each peak of the grayscale values of the image. In addition, a peak distribution of the grayscale values of the pixels needs to be based on the real image, because the sensing image keeps changing during training and cannot represent a real distribution.

Therefore, it can be learned that an overall bias value y between the sensing image and the real image is:

$$y = \sum_1^n x_i$$

y represents the overall bias value between the sensing image and the real image, n represents a quantity of peak distributions of the real image, i represents a sequence number of the peak distribution of the real image, and $x_i$ represents a bias value of an $i^{th}$ peak distribution of the real image, and may also be referred to as a bias value of a peak distribution i of the real image. In other words, the overall bias value y between the sensing image and the real image is equal to a sum of bias values of the n peak distributions of the real image.

The bias value $x_i$ of the peak distribution i of the real image may be an average value obtained based on absolute values of differences that are obtained by subtracting grayscale values of same pixel locations of the sensing image from pixel grayscale values of the peak distribution i of the real image.

For the specific process in which the real image is compared with the sensing image to obtain the sensing accuracy through calculation, refer to the existing implementation process. Details are not described herein again.

A magnitude of the $j^{th}$ reward value may represent a magnitude of an improvement value of the sensing accuracy that is of the training sensing result obtained through selection based on a trained selection neural network and that is compared with the sensing accuracy of the reference sensing result obtained through random selection. A larger reward value indicates a better selection neural network obtained through corresponding training.

In a possible design scheme, the first device determines the $j^{th}$ reward value. In another possible design scheme, the selection neural network and the third sensing neural network are separately deployed. When the third sensing neural network is deployed on the fourth device, the $j^{th}$ reward value may be sent by the fourth device to the first device, and the first device obtains the $j^{th}$ reward value from the fourth device.

Condition 1-2: A quantity of training times of the selection neural network is greater than or equal to a quantity threshold of training times.

The quantity of training times of the selection neural network may be based on one or more training sensing tasks of similar types. Refer to a quantity of execution times of S301 to S304.

Condition 1-3: A loss value of the selection neural network is less than or equal to a loss value threshold.

The loss value of the selection neural network represents a loss value that is obtained according to a loss function and that is between a real result and the training sensing result obtained by fusing the measurement results of the training measurement devices selected based on a trained selection neural network. A smaller loss value indicates a better training result.

It may be understood that if a reward value or a loss value obtained through a plurality of rounds of training basically no longer changes (converges), the first device may also terminate the training on the selection neural network.

It may be understood that the first device may perform determining based on any one of the foregoing condition 1-1 to condition 1-3, or may perform determining with reference to any two or three of the conditions. For example, the first device may determine, with reference to the condition 1-1 and the condition 1-2, whether to terminate the training. If both conditions are met, the training may be terminated. If only one condition is met or neither of the two conditions is met, the training may continue.

Therefore, S302 may be understood as that the first device determines, based on the quantity of training times of the selection neural network, whether the training termination condition is met, and/or determines, based on the reward value output in the training process, whether the training termination condition is met, in other words, may determine, with reference to the quantity of training times and/or the reward value, whether to stop training the selection neural network.

S303: The first device selects T training measurement devices based on the selection neural network, the $j^{th}$ training sensing result, and the $j^{th}$ reference sensing result. $1 \leq T < S$, and T is a positive integer.

Specifically, S303 includes the following step 3-1 and step 3-2.

Step 3-1: The first device determines, based on the $j^{th}$ training sensing result and the $j^{th}$ reference sensing result, the $j^{th}$ reward value used for the reinforcement learning.

For specific descriptions of step 3-1, refer to corresponding descriptions in the foregoing condition 1-1. Details are not described herein again.

Step 3-2: The first device selects the T training measurement devices based on the selection neural network, the $j^{th}$ training sensing result, and the $j^{th}$ reward value.

Specifically, the first device inputs the $j^{th}$ reward value into the selection neural network, where the $j^{th}$ reward value is used to update a parameter of the selection neural network. Then, the first device inputs the $j^{th}$ training sensing result and information about S-Q training measurement devices into an updated selection neural network, to obtain a $(j+1)^{th}$ training sensing result. Then, the first device selects the T training measurement devices from the S-Q training measurement devices based on the $(j+1)^{th}$ training sensing result. In other words, the $(j+1)^{th}$ time of selection may be selecting the T training measurement devices from remaining training measurement devices after the first j times of selection.

It should be noted that the first device may update the selection neural network based on the reward value by using a gradient ascent algorithm. For a specific process, refer to an existing deep reinforcement learning process. Details are not described again.

S304: The first device randomly selects P training measurement devices.

P=T, and P is a positive integer. The quantity of training measurement devices randomly selected by the first device each time is equal to the quantity of training measurement devices selected by the first device each time based on the selection neural network. The P training measurement devices may be the same as, different from, or partially the same as and partially different from training measurement devices that have been selected by the first device based on the selection neural network. This is not limited. The P training measurement devices are randomly selected by the first device at the $(j+1)^{th}$ time.

S305: The first device obtains the $(j+1)^{th}$ training sensing result and a $(j+1)^{th}$ reference sensing result that are output by the third sensing neural network.

The $(j+1)^{th}$ training sensing result is determined based on the information about and the measurement results of the Q training measurement devices and information about and measurement results of the T training measurement devices. The $(j+1)^{th}$ reference sensing result is determined based on the information about and the measurement results of the R training measurement devices and information about and measurement results of the P training measurement devices. Therefore, S305 may alternatively be understood as that the first device obtains, based on the T training measurement devices selected in S303 and the P training measurement devices selected in S304, the $(j+1)^{th}$ training sensing result and the $(j+1)^{th}$ reference sensing result that are output by the third sensing neural network.

In a possible design scheme, both the selection neural network and the third sensing neural network are deployed on the first device, and the first device may locally obtain the $(j+1)^{th}$ training sensing result and the $(j+1)^{th}$ reference sensing result that are output by the third sensing neural network.

Specifically, the first device may obtain the $(j+1)^{th}$ training sensing result based on the third sensing neural network and the measurement results of the Q training measurement devices and the T training measurement devices. In other words, after inputting the information about and the measurement results of the Q training measurement devices and the information about and the measurement results of the T training measurement devices selected in S303 into the third sensing neural network for processing, the first device may obtain the $(j+1)^{th}$ training sensing result. Similarly, the first device may obtain the $(j+1)^{th}$ reference sensing result based on the third sensing neural network, the information about and the measurement results of the R training measurement devices obtained through random selection, and the information about and the measurement results of the P training measurement devices.

In another possible design scheme, the third sensing neural network and the selection neural network are separately deployed. For example, the third sensing neural network is deployed on the fourth device, and the first device may receive the $(j+1)^{th}$ training sensing result and the $(j+1)^{th}$ reference sensing result from the fourth device.

Specifically, the fourth device obtains the $(j+1)^{th}$ training sensing result based on the third sensing neural network and the measurement results of the Q training measurement devices and the T training measurement devices, and the fourth device sends the $(j+1)^{th}$ training sensing result to the first device. Similarly, the fourth device obtains the $(j+1)^{th}$ reference sensing result based on the third sensing neural network and the measurement results of the R training measurement devices and the P training measurement devices, and then the fourth device sends the $(j+1)^{th}$ reference sensing result to the first device.

It can be learned from the foregoing that a training sensing result or a reference sensing result obtained by the first device each time is obtained by performing fusion processing on a measurement result of a currently selected training measurement device and measurement results of all previously selected training measurement devices.

It should be noted that S301 to S305 describe one time of training process. The first device may perform iterative training by using a training sample (for example, a training sample including the training sensing task and the training measurement device) with reference to S301 to S305, to obtain the trained selection neural network.

For example, the first device may perform next (for example, a $(j+2)^{th}$ time) training based on the obtained $(j+1)^{th}$ training sensing result and the obtained $(j+1)^{th}$ reference sensing result with reference to S302 to S305, until the first device determines that the training termination condition is met, to obtain the trained selection neural network used to perform the following measurement methods shown in FIG. 7 to FIG. 12.

With reference to a reinforcement learning architecture and a training interaction process, the following describes in detail a specific implementation process of the training method provided in embodiments of this application. The third sensing neural network and the selection neural network are separately deployed. For example, the selection neural network is deployed on the first device, and the third sensing neural network is deployed on the fourth device.

For example, FIG. 4A and FIG. 4B are a schematic flowchart 2 of a training method of a selection neural network according to an embodiment of this application. The training method is applicable to the system shown in FIG. 1 or FIG. 2, and a specific implementation is the training method shown in FIG. 3.

As shown in FIG. 4A and FIG. 4B, the training method includes the following steps.

S401: A first device receives a $j^{th}$ training sensing result and a $j^{th}$ reference sensing result from a fourth device.

For specific content of S401, refer to related descriptions in S301. Details are not described herein again.

S402: The first device determines whether a training termination condition is met.

For specific content of the training termination condition, refer to related descriptions in S302.

In a possible design scheme, if the first device determines that the training termination condition is not met, the first device performs S403 to S411.

In another possible design scheme, if the first device determines that the training termination condition is met, the first device performs S412.

S403: The first device selects T training measurement devices based on the selection neural network, the $j^{th}$ training sensing result, and the $j^{th}$ reference sensing result.

For a specific process of S403, refer to S303. Details are not described herein again.

S404: The first device randomly selects P training measurement devices.

For a specific process of S404, refer to S304. Details are not described herein again.

S405: The first device sends measurement indication information to the T training measurement devices.

The measurement indication information indicates a training measurement device to perform measurement, and the measurement indication information may include information about a selected training measurement device, for example, identification information and measurement start indication information of the T training measurement devices. The identification information may be a sequence number or a description of the training measurement device, the measurement start indication information may be location information or time information, and the training measurement device starts measurement when meeting a measurement start condition of the measurement start indication information.

Specifically, the first device separately sends the measurement indication information to the selected training measurement device, and the selected training measurement device performs measurement based on the measurement indication information.

In a possible design scheme, the first device may broadcast the measurement indication information, and the selected training measurement device starts measurement after successfully obtaining the broadcast information. Specifically, the broadcast measurement indication information may be included in a system message, and the system message may be a master information block (master information block, MIB) or a system information block (system information block, SIB). For example, the first device indicates, in the SIB message, that the identification information of the training measurement device is communication bandwidth of 100 MHz, and the measurement start indication information is a description of within 10 meters away from a point A in a cell. In this case, after parsing the system message of the first device, a measurement device obtains the identification information and the measurement start indication information. The measurement device complies with a description of the communication bandwidth of 100 MHz. When the measurement device moves to a range within 10 meters away from the point A in the cell, the measurement device starts measurement and becomes a training measurement device. Starting measurement may be that the measurement device randomly accesses (random access, RA) the first device. The measurement start indication information may further indicate a measurement periodicity.

It may be understood that measurement results at different moments may be different due to an environment change or movement of the training measurement device. Therefore, after each time of selection, the first device may indicate, in the measurement start indication information, the selected training measurement device and the measurement periodicity. The measurement may be performed once, or may be performed periodically based on an environment or device movement. To be specific, when a currently selected training measurement device is indicated to perform measurement, a previously selected training measurement device may re-perform a measurement task. Optionally, the first device may resend the measurement indication information to previously selected Q training measurement devices.

In a possible design scheme, the first device may alternatively not send the measurement indication information. For example, the previously selected Q training measurement devices periodically report or send measurement results.

S406: The first device sends the measurement indication information to the P training measurement devices.

For a specific process of S406, refer to S405. Details are not described herein again.

S407: The fourth device receives measurement results from the Q training measurement devices and the T training measurement devices.

Correspondingly, after completing measurement, each selected training measurement device sends a corresponding measurement result to the fourth device.

S408: The fourth device receives measurement results from R training measurement devices and the P training measurement devices.

Correspondingly, after completing measurement, a randomly selected training measurement device sends a corresponding measurement result to the fourth device.

S409: The fourth device obtains a $(j+1)^{th}$ training sensing result based on a third sensing neural network and the measurement results of the Q training measurement devices and the T training measurement devices.

S410: The fourth device obtains a $(j+1)^{th}$ reference sensing result based on the third sensing neural network and the measurement results of the R training measurement devices and the P training measurement devices.

For specific processes of S409 and S410, refer to S305. Details are not described herein again.

S411: The fourth device sends the $(j+1)^{th}$ training sensing result and the $(j+1)^{th}$ reference sensing result to the first device.

Correspondingly, the first device receives the $(j+1)^{th}$ training sensing result and the $(j+1)^{th}$ reference sensing result from the fourth device.

Further, after receiving the $(j+1)^{th}$ training sensing result and the $(j+1)^{th}$ reference sensing result, the first device determines, with reference to S402, whether the training termination condition is met. If the training termination condition is not met, the first device performs next training with reference to S403 to S411, and does not perform S412 until the first device determines that the training termination condition is met.

S412: The first device terminates training on the selection neural network.

Specifically, the first device terminating training on the selection neural network may indicate that the training on the selection neural network is completed.

It may be understood that S401 to S411 show one time of training process of the selection neural network. To complete a training process of the selection neural network, a plurality of times of training may be performed with reference to S401 to S411.

It should be understood that an execution sequence of S403, S404, S405, S406, S407 and S408 may be adjusted, and the execution sequence thereof is not specifically limited. For example, S404, S406, and S408 may be performed after S403, S405, and S407 are performed, or S405, S404, S406, S407, and S408 may be performed after S403 is performed.

It should be noted that, alternatively, the training on the selection neural network may be independently completed by the first device. For example, both the third sensing neural network and the selection neural network are deployed on the first device. For a specific training process, refer to the training method shown in FIG. 3. Details are not described again.

It should be noted that the training processes shown in FIG. 3 and FIG. 4A and FIG. 4B are obtained with reference to the reinforcement learning training.

For example, FIG. 5 is a diagram of a structure of deep reinforcement learning. As shown in FIG. 5, a first device is an execution body (that is, an agent) of the reinforcement learning, the first device makes a decision based on a selection neural network, and the first device interacts with an environment. The environment may include a third sensing neural network and S training measurement devices, and the third sensing neural network may be deployed on a fourth device.

In FIG. 5, the first device may observe the environment to obtain a current state, as shown in S401, then make the decision based on the selection neural network, as shown in S403 and S404, and output an action. The action may be S405 and S406. After the environment receives the action and executes the action, the state changes, and a reward value (or may be referred to as a return value) is obtained based on a current state and fed back to the first device, as shown in S407, S408, and S409. Then, the first device performs a next action based on the current state and the fed-back reward value, for example, performs iterative execution with reference to S402 to S411 until the foregoing training termination condition is met.

It should be noted that, in embodiments of this application, to ensure that the sensing neural network can fuse any quantity of measurement results and provide a sensing result as accurate as possible, when a plurality of measurement results are fused, one sensing result may be output each time one measurement result is added, a loss value is calculated based on the sensing result and a real sensing target, and the loss value is used to train the sensing neural network.

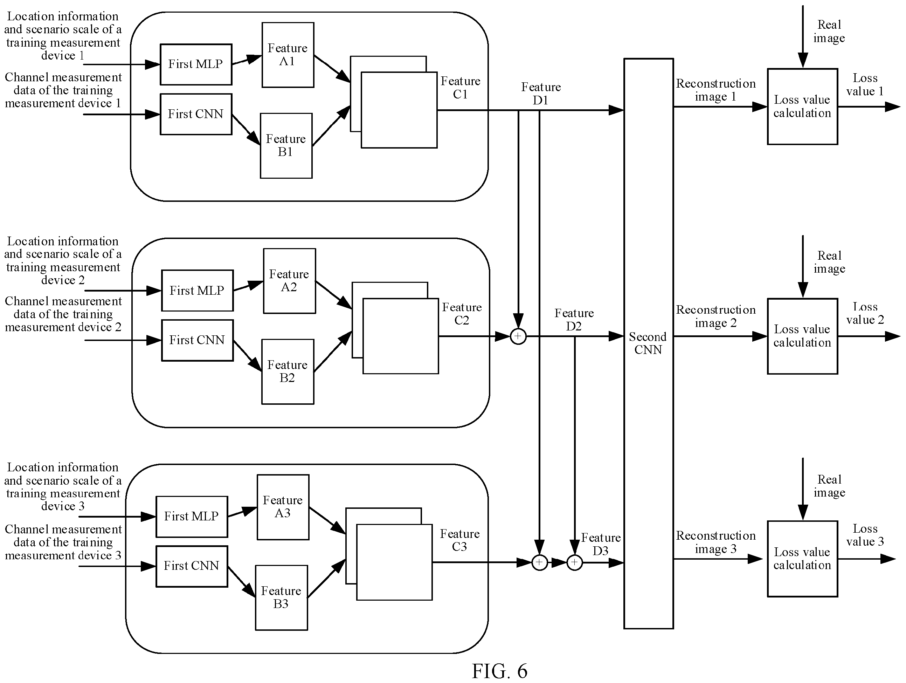

For example, FIG. 6 is a diagram of a structure of loss value calculation of a sensing neural network. The sensing neural network includes a first multilayer perceptron (multilayer perceptron, MLP), a first convolutional neural network (convolutional neural network, CNN), and a second CNN.

Environment reconstruction is used as an example. FIG. 6 shows a processing process in which the sensing neural network fuses measurement results of three training measurement devices, to obtain a loss value used for training. Training measurement devices 1 to 3 may be network devices, or may be terminal devices. Location information and a scenario scale represent information about a training measurement device, and channel measurement data represents a measurement result of the training measurement device.

Specifically, a first device may input location information and a scenario scale of the training measurement device 1 into the sensing neural network, and extract a feature, for example, a feature A1, of the data via the first MLP; input channel measurement data, and extract a feature, for example, a feature B 1, of the data via the first CNN; and then splice the feature A1 and the feature B1 of the training measurement device 1 to obtain a feature C1. In this case, there is only one training measurement device. Therefore, a feature D1 is the feature C1. In addition, the feature C1 is processed via the second CNN to obtain a reconstruction image 1, and a bias value is calculated based on the reconstruction image 1 and a real image, to obtain a loss value 1. Similarly, a feature C2 is obtained by processing information about and a measurement result of the training measurement device 2 via the first CNN, the first MLP, and the like. In this case, the feature C1 of the training measurement device 1 and the feature C2 of the training measurement device 2 are added to obtain a feature D2, the feature D1 is then processed via the second CNN to obtain a reconstruction image 2, and a bias value is calculated based on the reconstruction image 2 and the real image, to obtain a loss value 2. Similarly, a feature C3 is obtained by processing information about and a measurement result of the training measurement device 3 via the first CNN, the first MLP, and the like. After the feature C3 of the training measurement device 3 is obtained, the feature C1 of the training measurement device 1, the feature C2 of the training measurement device 2, and the feature C3 of the training measurement device 3 are added to obtain a feature D3, the feature D2 is then processed via the second CNN to obtain a reconstruction image 3, and a bias value is calculated based on the reconstruction image 3 and the real image, to obtain a loss value 3.

When the sensing neural network is trained, a used loss value is

$$\text{Loss value} = \text{loss value } 1 + \text{loss value } 2 + \text{loss value } 3.$$

:

It should be noted that if only the loss value 3 is used for the training, the sensing neural network can work well only when the three measurement devices are fused. On the contrary, when the measurement result is obtained incrementally, the loss value is also calculated incrementally for the training. In this way, it can be ensured that a sensing result as good as possible can be obtained regardless of whether one, two, or three measurement results are obtained. Certainly, a weight of each loss value may be adjusted based on an actual situation. For example, in a scenario, if there are many cases of fusing two measurement devices, a weight of the loss value 2 may be properly increased. That is, the loss value used for training the sensing neural network may alternatively be expressed as:

$$\text{Loss value} = \text{weight } 1 * \text{loss value } 1 + \text{weight } 2 * \text{loss value } 2 + \text{weight } 3 * \text{loss value } 3.$$

The loss value of the sensing neural network may be determined based on a fusion scenario, a quantity of measurement results, and the like. This is not limited. For a specific process of training the sensing neural network by using the loss value, refer to an existing implementation. Details are not described herein again. In addition, training processes of the first sensing neural network, the second sensing neural network, and the third sensing neural network in embodiments of this application may all be implemented based on the process shown in FIG. 6.

It should be noted that processing processes of the selection neural network and the third sensing neural network in the foregoing training process is similar to processing processes of the selection neural network and the first sensing neural network in the following measurement methods. Therefore, for the processing processes of the selection neural network and the first sensing neural network in the following measurement methods, refer to related descriptions in the foregoing training process.

According to the foregoing training methods shown in FIG. 3 to FIG. 6, a selection neural network and a sensing neural network that are used to implement the following measurement methods may be obtained. The following describes in detail the measurement methods provided in embodiments of this application with reference to FIG. 7 to FIG. 14.

For example, FIG. 7 is a schematic flowchart 1 of a measurement method according to an embodiment of this application. The measurement method is applicable to the first device in the system shown in FIG. 1.

As shown in FIG. 7, the measurement method includes the following steps.

S701: The first device obtains a $k^{th}$ first sensing result output by a first sensing neural network.

The first sensing neural network is used for a first sensing task, a first sensing result represents a result obtained by performing the first sensing task, and the $k^{th}$ first sensing result represents a sensing result obtained based on a measurement result of a measurement device selected at a $k^{th}$ time after the first device selects a measurement device for k times.

Specifically, the $k^{th}$ first sensing result is determined based on information about and measurement results of N measurement devices, the N measurement devices are obtained through selection from M measurement devices for k times based on a selection neural network, the selection neural network may be deployed on the first device, the M measurement devices are all measurement devices that can be used to complete the first sensing task, $1 \leq k \leq N < M$, and k, M, and N are positive integers. Information about a measurement device may be information that helps select the measurement device, such as identification information, location information, state information, and measurement result reporting periodicity information of the measurement device.

For example, when k=1, the N measurement devices are obtained by the first device through selection from the M measurement devices for one time (for example, the 1st time of selection) based on the selection neural network. In this case, the N measurement devices are at least one measurement device, and the 1st first sensing result is obtained based on a measurement result of the at least one measurement device obtained through the 1st time of selection. For another example, when k=2, the N measurement devices are obtained by the first device through selection from the M measurement devices for two times based on the selection neural network, and the N measurement devices include a measurement device selected at the 1st time and a measurement device selected at the 2nd time. In this case, the N measurement devices are at least two measurement devices, and the 2nd sensing result is obtained based on measurement results of the at least two measurement devices obtained through two times of selection. In other words, the first device selects at least one measurement device each time based on the selection neural network. For the measurement result of the measurement device, refer to related descriptions in the foregoing system embodiment. Details are not described herein again.

For example, in the scenario shown in FIG. 2, the first sensing task is environment reconstruction. The measurement device may be the network device and/or the terminal device in the scenario. A total quantity of network devices and/or terminal devices is M. The first device may be any network device or terminal device in FIG. 2. The N measurement devices obtained by the first device through selection from the M measurement devices for k times based on the selection neural network may be N network devices, or may be N terminal devices, or a total quantity of network devices and terminal devices obtained through selection for k times may be N. The measurement results of the N measurement devices may be channel measurement data.

It should be noted that the N measurement devices are obtained by the first device through selection for k times based on the selection neural network. When k>1, for a subsequent selection process (for example, starting from the 2nd time), a process in which the first device selects a measurement device at the 1st time based on the selection neural network is different from the subsequent selection process. Each time the first device selects a measurement device based on the selection neural network, the first device may use a first sensing result currently output by the first sensing neural network as an input for next selection of the selection neural network.

For example, k=4. When the 2nd time of selection is performed, fusion processing is performed, by using the first sensing neural network, on information about and a measurement result of the measurement device selected at the 1st time, to obtain the 1st first sensing result, the 1st first sensing result is used as an input of the selection neural network to obtain the 1st selection result, and then one or more measurement devices are determined based on the 1st selection result. The process may be referred to as the 2nd time of selection process. Similarly, when the 3rd time of selection is performed, fusion processing is performed, by using the first sensing neural network, on information about and measurement results of the measurement devices selected at the 1st time and the 2nd time, to obtain the 2nd first sensing result, the 2nd first sensing result is used as an input of the selection neural network to obtain the 3rd selection result, and then one or more measurement devices are determined based on the 3rd selection result. The process may be referred to as the 3rd time of selection process. Similarly, when the 4th time of selection is performed, fusion processing is performed, by using the first sensing neural network, on information about and measurement results of the measurement devices selected at the 1st time, the 2nd time, and the 3rd time, to obtain the 3rd first sensing result, the 3rd first sensing result is used as an input of the selection neural network to obtain the 4th selection result, and then one or more measurement devices are determined based on the 4th selection result. The process may be referred to as the 4th time of selection process. For a specific process in which the first device selects the measurement device each time, refer to S702 to S704. Details are not described herein again.

The measurement device selected by the first device at the 1st time (k=1) may be determined based on the selection neural network, the first sensing task, and information about the M measurement devices. Specifically, the first device performs initialization based on the first sensing task and the information about the M measurement devices, to obtain a first initial sensing result. After the first device inputs the first initial sensing result and the information about the M measurement devices into the selection neural network for processing, the 1st selection result is obtained.

For example, the first sensing task is the environment reconstruction, and the first device may determine that the first initial sensing result is a blank environment description. When the environment description is a two-dimensional top view of a building contour, the first initial sensing result may be a blank image without a building. For another example, the first sensing task is positioning, and it may be determined that the first initial sensing result is initial location coordinates. For example, the coordinates are (0, 0). For still another example, the first sensing task is determining whether there is a person in an environment. If a value output by the first sensing neural network is 1, it indicates that there is the person; or if an output value is 0, it indicates that there is no person. In this case, the first initial sensing result may be 0. For yet another example, the first sensing task is gesture recognition. If 1 to m output by the first sensing neural network respectively represent m gestures, where m>1, and m is a positive integer, the first initial sensing result may be a random gesture or a blank gesture.

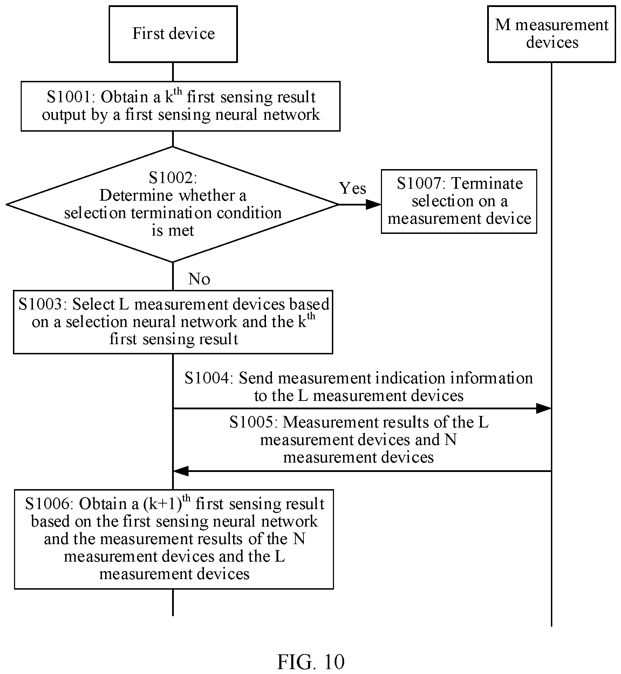

In a possible design scheme, the first sensing neural network may be deployed on the first device. In other words, the selection neural network and the first sensing neural network may be deployed on the first device. In this case, the first device may locally obtain the $k^{th}$ first sensing result output by the first sensing neural network. For details, refer to the following method embodiment shown in FIG. 10.

In another possible design scheme, the first sensing neural network and the selection neural network may be separately deployed. For example, the first sensing neural network is deployed on the second device shown in FIG. 1. In this case, the first device may receive the $k^{th}$ first sensing result from the second device. Specifically, the second device inputs the measurement results of the N measurement devices into the first sensing neural network, outputs the $k^{th}$ first sensing result after fusion processing, and then sends the $k^{th}$ first sensing result to the first device. For details, refer to the following method embodiment shown in FIG. 12.

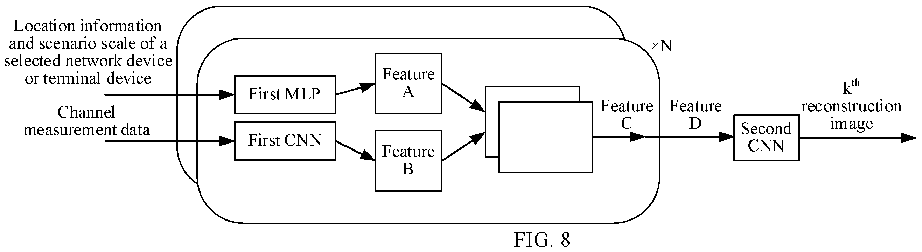

FIG. 8 is a diagram of a structure of fusion processing of a first sensing neural network according to an embodiment of this application, and may be applied to the first device or the second device. The first sensing task is the environment reconstruction. The first sensing neural network shown in FIG. 8 may include a first multilayer perceptron (multilayer perceptron, MLP), a first convolutional neural network (convolutional neural network, CNN), and a second CNN.

As shown in FIG. 8, when the sensing task of the environment reconstruction is performed, the first device or the second device may input the information (for example, location information and a scenario scale of a selected network device or terminal device) about and the measurement results (for example, the channel measurement data) of the N measurement devices into the first sensing neural network; for location information and a scenario scale of each selected network device or terminal device, extract a feature, for example, a feature A, of the data via the first MLP; for channel measurement data of each selected network device or terminal device, extract a feature, for example, a feature B, of the data via the first CNN; splice a feature A and a feature B of a same network device or terminal device to obtain a feature C; fuse features C corresponding to the N measurement devices, for example, fuse the N features C by using an attention mechanism or a feature addition manner to obtain a feature D; and finally process, via the second CNN, the feature D obtained through fusion, to obtain the $k^{th}$ first sensing result (for example, a $k^{th}$ environment reconstruction image).

It may be understood that the foregoing features A to D may represent feature vectors obtained through neural network processing. For details, refer to an existing implementation. Details are not described herein again. In addition, the structure of the first sensing neural network shown in FIG. 8 is designed based on the sensing task of the environment reconstruction. Based on different sensing tasks, processed data types are different, and the structure of the first sensing neural network may be different. This is not specifically limited.

It should be noted that the selection neural network may be obtained by the first device through training according to the training method shown in FIG. 3 or FIG. 4A and FIG. 4B, and the first sensing neural network may be obtained by the first device or the second device in FIG. 1 through independent training based on supervised learning by using a random selection policy.

S702: The first device determines that a selection termination condition is not met.

The selection termination condition indicates the first device to terminate the selection on the measurement device, and may indicate that the execution of the first sensing task is completed. The first device may determine, based on the selection termination condition, whether to continue to select the measurement device.

Specifically, the first device may perform determining based on one or more of the following selection termination conditions:

Condition 2-1: Accuracy of the $k^{th}$ first sensing result is greater than or equal to an accuracy threshold.

The accuracy of the $k^{th}$ first sensing result may indicate a ratio of the $k^{th}$ first sensing result to a real result, and higher accuracy of the $k^{th}$ first sensing result indicates that the first sensing result is closer to the real result. If the accuracy of the $k^{th}$ first sensing result does not reach the specified accuracy threshold, next selection of the measurement device is performed. For example, S703 to S705 are performed to select a measurement device at a $(k+1)^{th}$ time.

It may be understood that an error between the $k^{th}$ first sensing result and the real result may also indicate the accuracy of the $k^{th}$ first sensing result, and a smaller error between the $k^{th}$ first sensing result and the real result indicates higher accuracy. Related descriptions of the accuracy are not specifically limited.

Condition 2-2: A quantity of times for the first device to select a measurement device is greater than or equal to a quantity threshold of selection times.

The quantity of times for the first device to select the measurement device is a quantity of times of selection that has been currently performed by the first device, for example, the foregoing k times. If the quantity of times for the first device to select the measurement device does not reach a maximum quantity of selection times (for example, the specified quantity threshold of selection times), next selection of the measurement device is performed. For example, S703 and S704 are performed to select a measurement device at a $(k+1)^{th}$ time.

In addition, if the first device determines that the condition 2-1 and the condition 2-2 are not met, the first device may no longer perform the next selection of the measurement device, for example, no longer perform S703 and S704, that is, no longer select the measurement device at the $(k+1)^{th}$ time.

It should be noted that, if an accuracy improvement value of the accuracy of the $k^{th}$ first sensing result is basically unchanged or slightly changed in comparison with accuracy of several previous output first sensing results. For example, from a $(k-4)^{th}$ first sensing result to the $k^{th}$ first sensing result, if the accuracy of the first sensing result changes slightly, the first device may no longer perform the next selection of the measurement device.

It may be understood that the first device may perform determining based on one or more of the condition 2-1 and the condition 2-2. For example, the first device may determine, with reference to both the condition 2-1 and the condition 2-2, whether to terminate the selection on the measurement device, and may terminate the selection on the measurement device when determining that both the condition 2-1 and the condition 2-2 are met, or may continue, when determining that only one condition is met or neither of the two conditions is met, to select the measurement device.

Therefore, S702 may alternatively be understood as that after selecting the measurement device based on the selection neural network and obtaining the first sensing result based on the measurement result of the selected measurement device, the first device may determine, with reference to the quantity of selection times and/or the first sensing result, whether to terminate the selection on the measurement device.

S703: The first device selects L measurement devices based on the selection neural network and the $k^{th}$ first sensing result.

$1 \leq L < M$, and L is a positive integer.

Further, $1 \leq L < M-N$. Specifically, the first device may select the L measurement devices (for example, perform the $(k+1)^{th}$ time of selection) based on the selection neural network, the $k^{th}$ first sensing result, and information about M-N measurement devices. The M-N measurement devices represent measurement devices that have not been selected after measurement devices that have been selected at previous k times are subtracted.

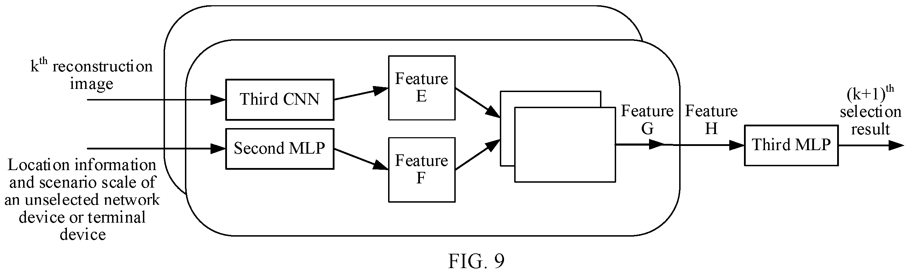

FIG. 9 is a diagram of a structure of processing of a selection neural network according to an embodiment of this application, and may be applied to the first device. The first sensing task is the environment reconstruction. The selection neural network shown in FIG. 9 may include a third CNN, a second MLP, and a third MLP.

As shown in FIG. 9, when the sensing task of the environment reconstruction is performed, the first device inputs the $k^{th}$ first sensing result (for example, a $k^{th}$ environment reconstruction image) and the information about the M-N measurement devices (for example, location information and a scenario scale of an unselected network device or terminal device) into the first sensing neural network; extracts a feature E of the $k^{th}$ environment reconstruction image via the third CNN; extracts a feature F of location information and a scenario scale of each unselected network device or terminal device via the second MLP; splices the feature F corresponding to each unselected network device or terminal device and the feature E to obtain a feature G, that is, M-N features G; then fuses the M-N features G to obtain a feature H, where similarly, for example, the fusion is performed by using an attention mechanism or a feature addition manner; and finally processes the feature H via the third MLP, to obtain a $(k+1)^{th}$ selection result. The first device may select the L measurement devices (for example, L network devices, or L terminal devices, or a total quantity of network devices and terminal devices is L) based on the $(k+1)^{th}$ selection result.

In a possible design scheme, when selecting a measurement device, the first device may select a previously selected measurement device. For example, when the selected measurement device moves, the measurement device re-reports information about the measurement device, and the first device may reselect the measurement device based on updated information (for example, location information) about the measurement device. For another example, if an environment changes, the measurement result may change, and the first device may repeatedly select the previously selected measurement device.

For example, as shown in FIG. 9, when the sensing task of the environment reconstruction is performed, the first device inputs the $k^{th}$ first sensing result (for example, a $k^{th}$ environment reconstruction image) and the M measurement devices into the first sensing neural network, where in this case, location information and scenario scales of unselected network devices or terminal devices may be location information and scenario scales of M network devices or terminal devices, and may also be referred to as location information and scenario scales of to-be-selected network devices or terminal devices; extracts a feature E of the $k^{th}$ environment reconstruction image via the third CNN; extracts a feature F of location information and a scenario scale of each unselected network device or terminal device via the second MLP; splices the feature F corresponding to each unselected network device or terminal device and the feature E to obtain a feature G, that is, M features G; then fuses the M features G to obtain a feature H, where similarly, for example, the fusion is performed by using an attention mechanism or a feature addition manner; and finally processes the feature H via the third MLP, to obtain a $(k+1)^{th}$ selection result. The first device may select the L measurement devices (for example, L network devices, or L terminal devices, or a total quantity of network devices and terminal devices is L) based on the $(k+1)^{th}$ selection result.

Similarly, the foregoing features E to H may represent feature vectors obtained through neural network processing. For details, refer to an existing implementation. Details are not described herein again. In addition, the structure of the selection neural network shown in FIG. 9 is designed based on the sensing task of the environment reconstruction. Based on different sensing tasks, processed data types are different, and the structure of the selection neural network may also be different. This is not specifically limited.

It may be understood that the selection result output by the selection neural network may be a probability value, and the first device may select a corresponding measurement device based on the output probability value.

In a possible design scheme, the first device may select the L measurement devices based on the selection neural network, an $i^{th}$ second sensing result, and the $k^{th}$ first sensing result. A second sensing neural network is used for a second sensing task, the $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers. The second sensing neural network may be deployed on the third device shown in FIG. 1, and the W measurement devices may be the same as or different from the foregoing M measurement devices. For details, refer to the following method embodiment shown in FIG. 12.

It may be understood that, after selecting the L measurement devices, the first device may send measurement indication information to the selected L measurement devices based on identifiers of the selected measurement devices, where the measurement indication information indicates the selected measurement devices to perform measurement.

S704: The first device obtains a $(k+1)^{th}$ first sensing result output by the first sensing neural network.

In a possible design scheme, the first sensing neural network is deployed on the first device, and the first device may locally obtain the $(k+1)^{th}$ first sensing result output by the first sensing neural network. Specifically, the first device inputs measurement results of the N measurement devices and the L measurement devices and information about the N measurement devices and the L measurement devices into the first sensing neural network, and obtains the $(k+1)^{th}$ first sensing result after the first sensing neural network performs fusion processing on the measurement results of the N measurement devices and the L measurement devices. The information about and the measurement results of the N measurement devices and the L measurement devices may be sent by the N measurement devices and the L measurement devices to the first device.

In another possible design scheme, the first sensing neural network is deployed on another device, for example, the second device, and the first device may receive the $(k+1)^{th}$ first sensing result from the second device. Specifically, the second device receives information and measurement results from the N measurement devices and the L measurement devices, and inputs the information about and the measurement results of the N measurement devices and the L measurement devices into the first sensing neural network, to obtain the $(k+1)^{th}$ first sensing result, and then the second device sends the $(k+1)^{th}$ first sensing result to the first device.

In the foregoing two design schemes, for example, the first sensing task is the environment reconstruction, and the $(k+1)^{th}$ first sensing result is a $(k+1)^{th}$ environment reconstruction image. For a process in which the first device or the second device obtains the $(k+1)^{th}$ environment reconstruction image based on processing of the first sensing neural network, refer to the foregoing processing process shown in FIG. 8.

Further, after obtaining the $(k+1)^{th}$ first sensing result, the first device determines, with reference to S702, whether to continue to perform next (for example, a $(k+2)^{th}$ time) selection of a measurement device. If selecting a measurement device needs to be continued, the selection continues to be performed by using the $(k+1)^{th}$ first sensing result with reference to S703 and S704, until the first device determines that the selection termination condition is met.

It may be understood that, in each process in which the first device selects the measurement device, a comparison parameter in the selection termination condition changes each time. For example, before the first device performs the $(k+2)^{th}$ time of selection, the first device determines, based on accuracy of the $(k+1)^{th}$ first sensing result, whether the accuracy threshold is reached, or the first device determines, based on k+1 times, whether the quantity threshold of selection times is reached.

The following describes in detail the measurement method shown in FIG. 7 with reference to interaction procedures and specific application scenarios.

For example, FIG. 10 is a schematic flowchart 2 of a measurement method according to an embodiment of this application. A selection neural network and a first sensing neural network are deployed on a first device.

As shown in FIG. 10, the measurement method includes the following steps.

S1001: The first device obtains a $k^{th}$ first sensing result output by the first sensing neural network.

Specifically, the first device inputs information about and measurement results of N measurement devices into the first sensing neural network, and the N measurement devices are obtained through selection from M measurement devices for k times based on the selection neural network. After the first sensing neural network performs fusion processing on the information about and the measurement results of the N measurement devices, the $k^{th}$ first sensing result is obtained.

The information about and the measurement results of the N measurement devices may be sent by the N measurement devices to the first device. In a process in which the first device obtains the N measurement devices through selection from the M measurement devices for k times based on the selection neural network, for a specific process of selecting a measurement device at each subsequent time other than a process of selecting a measurement device at the 1st time, refer to S1001 to S1006. For the specific process of selecting the measurement device at the 1st time, refer to related descriptions in S701. Details are not described herein again.

S1002: The first device determines whether a selection termination condition is met.

For the selection termination condition, refer to specific descriptions in S702. Details are not described herein again.

In a possible design scheme, if the first device determines that the selection termination condition is met, the first device performs S1007.

In another possible design scheme, if the first device determines that the selection termination condition is not met, the first device performs S1003 to S1006.

S1003: The first device selects L measurement devices based on the selection neural network and the $k^{th}$ first sensing result.

For a specific process of S1003, refer to S703. Details are not described herein again.

S1004: The first device sends measurement indication information to the L measurement devices.

The measurement indication information indicates a selected measurement device to perform measurement, and the measurement indication information may include identification information, measurement start indication information, and the like of the selected measurement device. The identification information may be a sequence number or a description of the measurement device, the measurement start indication information may be location information or time information, and the training measurement device starts measurement when meeting a measurement start condition of the measurement start indication information. Specifically, the first device may separately send the measurement indication information to the L measurement devices based on identification information of the L selected measurement devices, and the L selected measurement devices perform measurement based on the measurement indication information.

In a possible design scheme, the first device may broadcast the measurement indication information, and the selected measurement device starts measurement after successfully obtaining the broadcast information. Specifically, the broadcast measurement indication information may be included in a system message, and the system message may be a master information block (master information block, MIB) or a system information block (system information block, SIB). For example, the first device indicates, in the SIB message, that the identification information of the measurement device is communication bandwidth of 100 megahertz (megahertz, MHz), and the measurement start indication information is a description of within 10 meters away from a point A in a cell. In this case, after parsing the system message of the first device, a measurement device obtains the identification information and the measurement start indication information. The measurement device complies with a description of the communication bandwidth of 100 MHz. When the measurement device moves to a range within 10 meters away from the point A in the cell, the measurement device starts measurement and becomes a measurement device. Starting measurement may be that the measurement device randomly accesses (random access, RA) the first device. The measurement start indication information may further indicate a measurement periodicity.

It may be understood that measurement results at different moments may be different due to an environment change or movement of the training measurement device. Therefore, after each time of selection, the first device may indicate, in the measurement start indication information, the selected measurement device and the measurement periodicity. The measurement may be performed once, or may be performed periodically based on an environment or device movement. To be specific, when a currently selected measurement device is indicated to perform measurement, a previously selected measurement device may re-perform a measurement task. Optionally, the first device may resend the measurement indication information to the previously selected N measurement devices.

In a possible design scheme, the first device may alternatively not send the measurement indication information. For example, the previously selected N measurement devices periodically report or send the measurement results.

S1005: The first device receives measurement results from the L measurement devices and the N measurement devices.

Specifically, after completing measurement, the selected L measurement devices and the selected N measurement devices send corresponding measurement results to the first device.

S1006: The first device obtains a $(k+1)^{th}$ first sensing result based on the first sensing neural network and the measurement results of the N measurement devices and the L measurement devices.

For a specific process of S1006, refer to related descriptions in S704.

Further, after the first device obtains the $(k+1)^{th}$ first sensing result, the first device may perform a subsequent process of selecting a measurement device with reference to S1002 to S1006 until the first device determines that the selection termination condition is met.

For example, if after obtaining the $8^{th}$ first sensing result, the first device determines that the selection termination condition is not met, the first device may select a measurement device at the $9^{th}$ time and the $10^{th}$ time. For the selection of the measurement device at the $9^{th}$ time and the $10^{th}$ time, refer to S1002 to S1006.

S1007: The first device terminates selection on a measurement device.

For example, after fifteen times of selection, the first device determines, with reference to the selection termination condition in S1002, that one or more of the selection termination conditions are met. If the first device determines that accuracy of the $15^{th}$ first sensing result reaches an accuracy threshold, the first device no longer selects a measurement device at the $16^{th}$ time, which may indicate that execution of a first sensing task is completed.

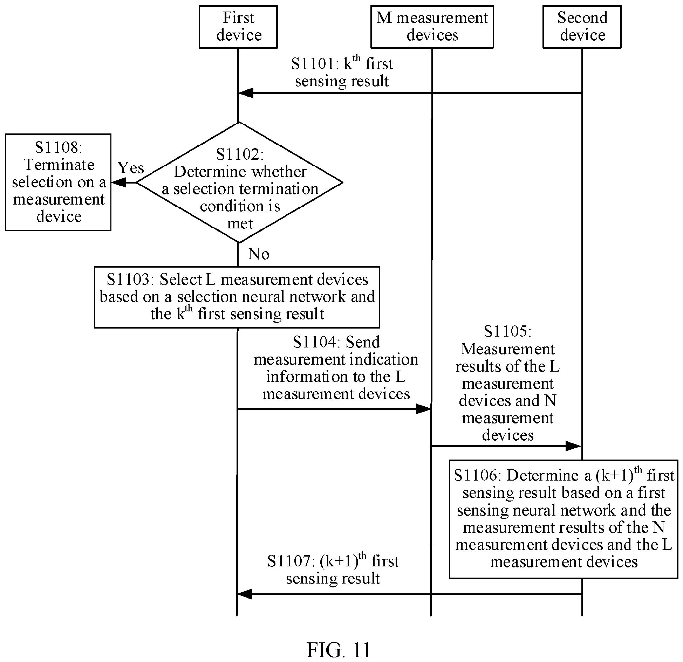

The measurement method shown in FIG. 10 is implemented based on that both the selection neural network and the first sensing neural network are deployed on the first device. In a specific implementation process, the selection neural network and the first sensing neural network may be separately deployed. For example, the selection neural network is deployed on the first device, and the first sensing neural network is deployed on a second device. For example, FIG. 11 is a schematic flowchart 3 of a measurement method according to an embodiment of this application.

As shown in FIG. 11, the measurement method includes the following steps.

S1101: A first device receives a $k^{th}$ first sensing result from a second device.

Specifically, the second device inputs information about and measurement results of N measurement devices into a first sensing neural network, outputs the $k^{th}$ first sensing result after fusion processing, and then sends the $k^{th}$ first sensing result to the first device.

The information about and the measurement results of the N measurement devices may be sent by the N measurement devices to the second device. In a process in which the first device obtains the N measurement devices through selection from M measurement devices for k times based on a selection neural network, for a specific process of selecting a measurement device at each subsequent time other than a process of selecting a measurement device at the $1^{st}$ time, refer to S1101 to S1106. For the specific process of selecting the measurement device at the $1^{st}$ time, refer to related descriptions in S701. Details are not described herein again.

S1102: The first device determines whether a selection termination condition is met.

For the selection termination condition, refer to specific descriptions in S702. Details are not described herein again.

In a possible design scheme, if the first device determines that the selection termination condition is met, the first device performs S1108.

In another possible design scheme, if the first device determines that the selection termination condition is not met, the first device performs S1103 to S1107.

S1103: The first device selects L measurement devices based on the selection neural network and the $k^{th}$ first sensing result.

For a specific process of S1103, refer to related descriptions in S703. Details are not described herein again.

S1104: The first device sends measurement indication information to the L measurement devices.

For a specific process of S1104, refer to S1004. Details are not described herein again.

S1105: The second device receives measurement results from the L measurement devices and the N measurement devices.

Specifically, after completing measurement based on the measurement indication information, the L measurement devices and the N measurement devices send the measurement results to the second device.

Optionally, the second device may further receive information about the L measurement devices and the N measurement devices, for example, location information and state information of the L measurement devices and the N measurement devices.

Optionally, the information about the L measurement devices and the N measurement devices may be sent by the L measurement devices and the N measurement devices to the second device, or may be sent by the first device to the second device.

S1106: The second device obtains a $(k+1)^{th}$ first sensing result based on the first sensing neural network and the measurement results of the N measurement devices and the L measurement devices.

For a specific process of S1106, refer to related descriptions in S704. Details are not described herein again.

S1107: The first device receives the $(k+1)^{th}$ first sensing result from the second device.

Specifically, after obtaining the $(k+1)^{th}$ first sensing result, the first device selects a subsequent measurement device with reference to S1102 to S1107, and does not perform S1108 until the selection termination condition is met.

S1108: The first device terminates the selection on the measurement device.

Specifically, that the first device terminates the selection on the measurement device may indicate that a first sensing task is completed.

For example, after selecting a measurement device for fifteen times, the first device obtains the $15^{th}$ first sensing result. The first device may perform determining with reference to the selection termination condition in S702. If the first device determines that accuracy of the $15^{th}$ first sensing result reaches an accuracy threshold, the first device no longer selects a measurement device at the $16^{th}$ time with reference to S1103 to S1107.

The measurement methods shown in FIG. 7, FIG. 10, and FIG. 11 each are a process of incremental selection and sensor fusion. The first device selects the measurement device each time by using a currently obtained first sensing result. The first sensing result is obtained by fusing a measurement result of a measurement device currently selected by the first device and a measurement result of a previously selected measurement device. The first device repeats the foregoing selection and fusion processes, to obtain a more accurate sensing result.

Further, the first device may coordinate a plurality of sensing tasks, to select the measurement device, so as to implement the plurality of sensing tasks. For example, FIG. 12 is a schematic flowchart 4 of a measurement method according to an embodiment of this application. A selection neural network is deployed on a first device, a first sensing neural network is deployed on a second device, and a second sensing neural network is deployed on the second device.

As shown in FIG. 12, the measurement method includes the following steps.

S1201: The first device receives a $k^{th}$ first sensing result from the second device.

For a specific process of S1201, refer to S701 or S1101.

S1202: The first device receives an $i^{th}$ second sensing result from a third device.

The second sensing neural network is deployed on the third device, and the second sensing neural network is used for a second sensing task. The second sensing task is associated with a first sensing task. For example, the first sensing task is environment reconstruction, the second sensing task is tracking and positioning, the tracking and positioning may be performed in a currently reconstructed environment, a first sensing result (for example, an environment image) obtained based on the first sensing task (environment reconstruction) has an auxiliary improvement effect on the second sensing task (tracking and positioning), and a second sensing result obtained based on the second sensing task is valuable information for the first sensing task.

The $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers.

The W measurement devices may be measurement devices completely different from the foregoing M measurement devices. For example, a quantity of measurement devices, and types and locations of the measurement devices are different. The W measurement devices may alternatively be the foregoing M measurement devices, and execution of the first sensing task and the second sensing task is completed based on a same measurement device. For a processing process of the $i^{th}$ second sensing result, refer to the foregoing processing process of the $k^{th}$ first sensing result. Details are not described herein again.

S1203: The first device determines that a selection termination condition is not met.

For specific content of S1203, refer to specific descriptions in S702. Details are not described herein again.

It should be noted that, in addition to determining whether the selection termination condition is met after the first sensing task is completed, the first device may also determine whether the selection termination condition is met after the second sensing task is completed. Determining the selection termination condition of the second sensing task is similar to determining the selection termination condition of the first sensing task, and the selection termination condition may be adjusted based on a type of the sensing task. This is not limited.

S1204: The first device selects L measurement devices based on the selection neural network, the $k^{th}$ first sensing result, and the $i^{th}$ second sensing result.

Specifically, the first device updates the $k^{th}$ first sensing result based on the $i^{th}$ second sensing result; inputs an updated $k^{th}$ first sensing result into the selection neural network; processes, by using the selection neural network, the updated $k^{th}$ first sensing result and information about M-N measurement devices, as shown in the processing process shown in FIG. 9; and outputs a $(k+1)^{th}$ selection result. The first device may determine the selected L measurement devices based on the $(k+1)^{th}$ selection result.

It should be noted that the $1^{st}$ time of selection performed by the first device based on the first sensing task is different from a subsequent selection process.

Specifically, before the first device performs the $1^{st}$ time of selection based on the first sensing task, the first device may determine a first initial sensing result based on the first sensing task and information about the M measurement devices, and may determine a second initial sensing result based on the second sensing task and information about the W measurement devices.

For example, the first sensing task is the environment reconstruction, the first initial sensing result determined by the first device may be a blank image, the second sensing task is the tracking and positioning, and the second initial sensing result determined by the first device may be initial location coordinates (0, 0).

Further, when the first device performs the $1^{st}$ time of selection based on the first sensing task, the first device may determine, based on the selection neural network, the first initial sensing result, and the $i^{th}$ second sensing result, a measurement device selected at the $1^{st}$ time. Specifically, the first device updates the first initial sensing result based on the $i^{th}$ second sensing result, inputs an updated first initial sensing result into the selection neural network, and determines, by using the selection neural network, the first initial sensing result, and the information about the M measurement devices, the measurement device selected at the $1^{st}$ time.

The $i^{th}$ second sensing result may alternatively be obtained by the first device by selecting a measurement device for one time, that is, i=1. Similarly, for a measurement device selected by the first device at the $1^{st}$ time based on the second sensing task, the first device may determine the measurement device selected at the $1^{st}$ time based on the selection neural network, the second sensing task, and the information about the W measurement devices. For details, refer to the foregoing process in which the first device selects the measurement device at the $1^{st}$ time based on the first sensing task. Details are not described herein again.

Optionally, the $i^{th}$ second sensing result may alternatively be obtained by the first device by selecting a measurement device for a plurality of times, that is, i>1. For example, the first device selects a measurement device for three times, the $i^{th}$ second sensing result is the $3^{rd}$ second sensing result, and the $3^{rd}$ second sensing result may be determined based on the second sensing neural network and measurement results of measurement devices selected by the first device for three times. For a process in which the first device obtains the $3^{rd}$ second sensing result by selecting a measurement device at the $2^{nd}$ time and the $3^{rd}$ time based on the second sensing task, refer to S701 to S704 or S1101 to S1106. Details are not described herein again.

S1205: The first device sends measurement indication information to the L measurement devices.

For a specific process of S1205, refer to S1004 and/or S1104. Details are not described herein again.

S1206: The second device receives measurement results from the L measurement devices.

For a specific process of S1206, refer to S1105. Details are not described herein again.

S1207: The second device obtains a $(k+1)^{th}$ first sensing result based on the first sensing neural network and measurement results of N measurement devices and the L measurement devices.

For a specific process of S1207, refer to related descriptions in S704. Details are not described herein again.

S1208: The first device receives the $(k+1)^{th}$ first sensing result from the second device.

In a possible design scheme, after the first device obtains the $(k+1)^{th}$ first sensing result, based on the second sensing task, the first device may select a measurement device at an $(i+1)^{th}$ time based on the selection neural network, the $(k+1)^{th}$ first sensing result, and the $i^{th}$ second sensing result, to obtain an $(i+1)^{th}$ second sensing result. Specifically, the first device selects the measurement device at the $(i+1)^{th}$ time based on the second sensing task. For details, refer to a process in which the first device selects a measurement device at a $(k+1)^{th}$ time based on the first sensing task, as shown in S1204.

Further, based on the first sensing task, the first device may select a measurement device at a $(k+2)^{th}$ time based on the selection neural network, the $(i+1)^{th}$ second sensing result, and the $(k+1)^{th}$ first sensing result.

In another possible design scheme, after the first device obtains the $(k+1)^{th}$ first sensing result, the first device may select a measurement device for a plurality of times with reference to S1102 to S1107, for example, from a $(k+1)^{th}$ time to a $(k+3)^{th}$ time, to obtain a $(k+3)^{th}$ first sensing result.

Further, based on the second sensing task, the first device may select a measurement device at an $(i+1)^{th}$ time based on the selection neural network, the $(k+3)^{th}$ first sensing result, and the $i^{th}$ second sensing result, to obtain an $(i+1)^{th}$ second sensing result. For a specific process, still refer to S 1204.

Still further, after the first device obtains the $(i+1)^{th}$ second sensing result, the first device may also select a measurement device for a plurality of times with reference to S 1102 to S1107, for example, from the $(i+1)^{th}$ time to an $(i+5)^{th}$ time, to obtain an $(i+5)^{th}$ second sensing result.

Even further, based on the first sensing task, the first device selects a measurement device at a $(k+4)^{th}$ time based on the selection neural network, the $(i+5)^{th}$ second sensing result, and the $(k+3)^{th}$ first sensing result. For a specific process, still refer to S1204.

Therefore, in the foregoing two possible design schemes, the first device may alternately select a measurement device based on the first sensing task and the second sensing task, and use a sensing result of one sensing task to improve accuracy of a sensing result of the other sensing task until the first device determines that the selection termination condition is met, to obtain the most accurate first sensing result and second sensing result.

It should be noted that the first device may coordinate two or more sensing tasks. For details, refer to S1201 to S 1208. This is not specifically limited. It may be understood that there should be a correlation between every two of more than two sensing tasks.

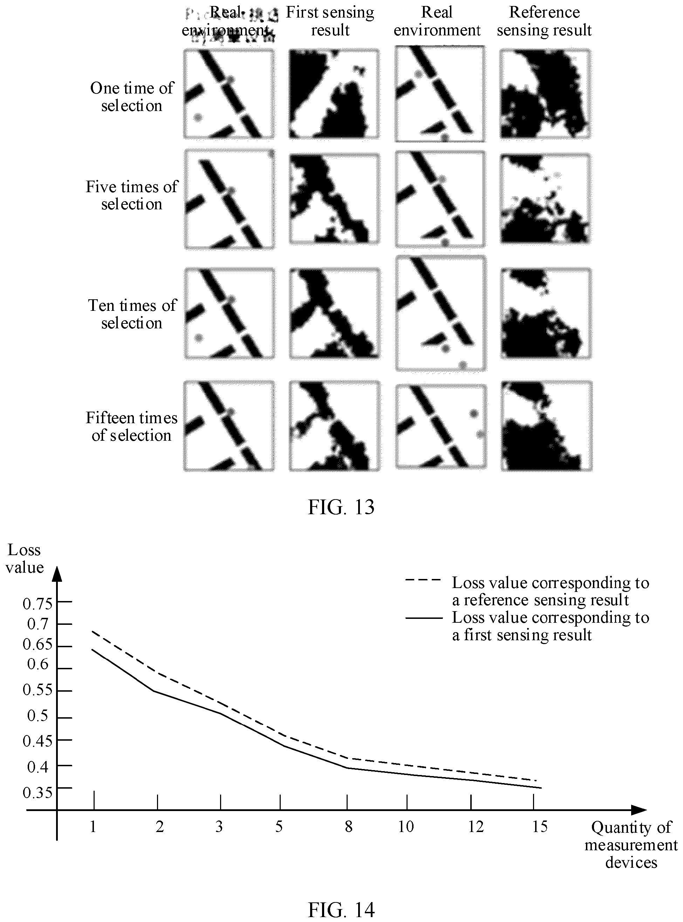

For example, the environment reconstruction is used as the first sensing task. FIG. 13 is a diagram of comparison between first sensing results and reference sensing results.

FIG. 13 shows the first sensing results obtained by selecting a measurement device for one time, five times, ten times, and fifteen times according to the measurement method provided in embodiments of this application, and the reference sensing results obtained by randomly selecting a measurement device for one time, five times, ten times, and fifteen times, where one measurement device is selected each time. It can be learned that, the first sensing result obtained through the $5^{th}$ time of selection according to the measurement method provided in embodiments of this application is close to a real environment, but the reference sensing result obtained through fifteen times of random selection is still greatly different from the real environment. Therefore, it can be learned that accuracy of the sensing result obtained by using the measurement method provided in embodiments of this application is greatly improved, and a quantity of measurement devices can be greatly reduced under a same sensing accuracy requirement, to reduce air interface and computing resource overheads, so as to improve sensing efficiency.

Further, FIG. 14 is a line graph of loss value changes of a first sensing result and a reference sensing result.

As shown in FIG. 14, a dashed line represents a loss value change obtained by comparing the reference sensing result obtained through random selection with a real environment, and a solid line represents a loss value change obtained by comparing the first sensing result obtained according to the measurement method provided in embodiments of this application with the real environment.

As a quantity of measurement devices increases, a loss value corresponding to the first sensing result obtained according to the measurement method provided in embodiments of this application is always less than a loss value corresponding to the reference sensing result obtained through random selection. It may be understood that a smaller loss value corresponds to higher sensing accuracy. Therefore, FIG. 14 may alternatively be represented as a line graph of sensing accuracy changes of the first sensing result and the reference sensing result.

It can be learned from FIG. 14 that the accuracy of the sensing result obtained by using the measurement method provided in embodiments of this application is greatly improved, and according to the measurement method provided in embodiments of this application, a quantity of measurement devices can be greatly reduced under a same sensing accuracy requirement, to reduce air interface and computing resource overheads.

According to the measurement method shown in any one of FIG. 7 to FIG. 12, when executing a sensing task, the first device may select a current measurement device based on the selection neural network in combination with a first sensing result output by the first sensing neural network last time, where the first sensing result output by the first sensing neural network last time is obtained through fusion of measurement results of previously selected measurement devices, and a first sensing result obtained through fusion after the current selection is obtained based on measurement results of the currently selected measurement device and the previously selected measurement devices. Therefore, the first device implements incremental selection of the measurement device in an iterative manner based on a first sensing result obtained through each time of selection, so that a measurement result obtained by a measurement device selected each time helps improve the sensing result, and the first sensing result is obtained through fusion of measurement results of the incrementally selected measurement devices, to implement an incremental sensing process. This can not only avoid redundant selection of the measurement device, reduce data transmission and computing resource overheads, and improve sensing efficiency, but also improve sensing accuracy.

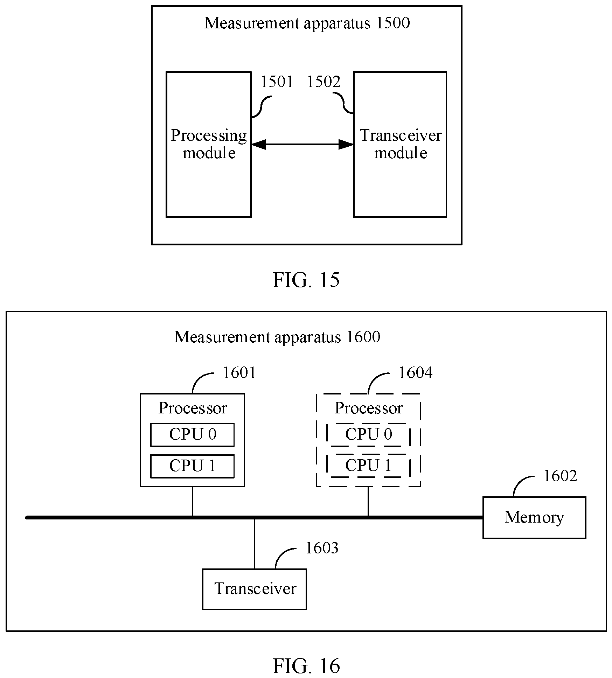

The foregoing describes in detail the measurement methods provided in embodiments of this application with reference to FIG. 3 to FIG. 14. The following describes, in detail with reference to FIG. 15 and FIG. 16, measurement apparatuses configured to perform the measurement methods provided in embodiments of this application.

For example, FIG. 15 is a diagram 1 of a structure of a measurement apparatus according to an embodiment of this application. As shown in FIG. 15, a measurement apparatus 1500 includes a processing module 1501. For ease of description, FIG. 15 shows only main components of the measurement apparatus.

In some embodiments, the measurement apparatus 1500 is applicable to the sensing measurement system shown in FIG. 1, and performs a function of the first device in the method shown in any one of FIG. 3, FIG. 4A and FIG. 4B, or FIG. 7 to FIG. 12.

The processing module 1501 is configured to obtain a $k^{th}$ first sensing result output by a first sensing neural network, where the first sensing neural network is used for a first sensing task, the $k^{th}$ first sensing result is determined based on measurement results of N measurement devices, the N measurement devices are obtained through selection from M measurement devices for k times based on a selection neural network, $1 \leq k \leq N < M$, and k, M, and N are positive integers. The processing module is further configured to determine that a selection termination condition is not met.

The processing module 1501 is further configured to select L measurement devices based on the selection neural network and the $k^{th}$ first sensing result, where $1 \leq L < M$, and L is a positive integer.

The processing module 1501 is further configured to obtain a $(k+1)^{th}$ first sensing result output by the first sensing neural network, where the $(k+1)^{th}$ first sensing result is determined based on measurement results of the N measurement devices and the L measurement devices.

In a possible design scheme, the selection neural network is deployed on the apparatus, and the first sensing neural network is deployed on a second device. The measurement apparatus 1500 further includes a transceiver module 1502. The transceiver module 1502 is configured to receive the $k^{th}$ first sensing result from the second device.

Further, a measurement device selected by the measurement apparatus 1500 at the 1st time is determined based on the selection neural network, information about the M measurement devices, and task information of the first sensing task.

In a possible design scheme, the selection termination condition includes one or more of the following: Accuracy of the $k^{th}$ first sensing result is greater than or equal to an accuracy threshold; or a quantity of times for the measurement apparatus 1500 to select a measurement device is greater than or equal to a quantity threshold of selection times.

In a possible design scheme, the processing module 1501 is configured to: obtain an $i^{th}$ second sensing result output by a second sensing neural network, where the second sensing neural network is used for a second sensing task, the $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers; and select the L measurement devices based on the selection neural network, the $i^{th}$ second sensing result, and the $k^{th}$ first sensing result.

In a possible design scheme, the second sensing neural network is deployed on a third device. The transceiver module 1502 is further configured to receive the $i^{th}$ second sensing result from the third device.

In a possible design scheme, the processing module 1501 is configured to obtain a $j^{th}$ training sensing result and a $j^{th}$ reference sensing result that are output by a third sensing neural network, where the $j^{th}$ training sensing result is determined based on measurement results of Q training measurement devices, the Q training measurement devices are obtained through selection from S training measurement devices for j times based on the selection neural network, the j$^{th}$ reference sensing result is determined based on measurement results of R training measurement devices, the R training measurement devices are obtained through random selection from the S training measurement devices for j times, $1<j\leq Q<S$, R=Q, and j, Q, R, and S are positive integers.

The processing module 1501 is further configured to determine that a training termination condition is not met, where the training termination condition is used to terminate training on the selection neural network.

The processing module 1501 is further configured to select T training measurement devices based on the selection neural network, the j$^{th}$ training sensing result, and the j$^{th}$ reference sensing result, where $1\leq T<S$, and T is a positive integer.

The processing module 1501 is further configured to obtain a (j+1)$^{th}$ training sensing result and a (j+1)$^{th}$ reference sensing result that are output by the third sensing neural network. The (j+1)$^{th}$ training sensing result is determined based on measurement results of the Q training measurement devices and the T training measurement devices, the (j+1)$^{th}$ reference sensing result is determined based on measurement results of the R training measurement devices and P training measurement devices, the P training measurement devices are obtained through random selection from the S training measurement devices at a (j+1)$^{th}$ time, P=T, and P is a positive integer.

Further, the processing module 1501 is configured to: determine, based on the j$^{th}$ training sensing result and the j$^{th}$ reference sensing result, a j$^{th}$ reward value used for reinforcement learning; and select the T training measurement devices based on the selection neural network, the j$^{th}$ training sensing result, and the j$^{th}$ reward value.

Further, the processing module 1501 is configured to determine, based on a difference between sensing accuracy of the j$^{th}$ training sensing result and sensing accuracy of the j$^{th}$ reference sensing result, the j$^{th}$ reward value used for the reinforcement learning.

In a possible design scheme, the training termination condition includes one or more of the following: The j$^{th}$ reward value is greater than or equal to a reward value threshold; a quantity of training times of the selection neural network is greater than or equal to a quantity threshold of training times; or a loss value of the selection neural network is less than or equal to a loss value threshold.

In a possible design scheme, the third sensing neural network is deployed on a fourth device. The transceiver module 1502 is configured to receive the j$^{th}$ training sensing result and the j$^{th}$ reference sensing result from the fourth device.

Optionally, the transceiver module 1502 may include a receiving module and a sending module (not shown in FIG. 15). The sending module is configured to implement a sending function of the measurement apparatus 1500, and the receiving module is configured to implement a receiving function of the measurement apparatus 1500.

Optionally, the measurement apparatus 1500 may further include a storage module, and the storage module stores a program or instructions. When the processing module executes the program or the instructions, the measurement apparatus 1500 is enabled to perform the method in any one of FIG. 3, FIG. 4A and FIG. 4B, or FIG. 7 to FIG. 12.

It should be noted that the measurement apparatus 1500 may be a terminal device or a network device, may be a chip (system) or another component or assembly that may be disposed in a terminal device or a network device, or may be an apparatus that includes a terminal device or a network device. This is not limited in this application.

In addition, for technical effects of the measurement apparatus 1500, refer to technical effects of the method shown in any one of FIG. 7 to FIG. 12. Details are not described herein again.

In some other embodiments, the measurement apparatus 1500 is applicable to the communication system shown in FIG. 1, and performs a function of the second device in the method shown in FIG. 11 or FIG. 12.

The transceiver module 1502 is configured to receive measurement results from N measurement devices, where a first sensing neural network is deployed on the apparatus. The first sensing neural network is used for a first sensing task, the N measurement devices are obtained through selection from M measurement devices for k times based on a selection neural network, the selection neural network is deployed on a first device, $1\leq k\leq N<M$, and k, M, and N are positive integers.

The processing module 1501 is configured to obtain a k$^{th}$ first sensing result based on the first sensing neural network and the measurement results of the N measurement devices.

The transceiver module 1502 is further configured to send, by a second device, the k$^{th}$ first sensing result to the first device.

In a possible design scheme, the transceiver module 1502 is configured to receive a k$^{th}$ selection result from the first device, where the k$^{th}$ selection result indicates a measurement device selected by the first device at a k$^{th}$ time based on the selection neural network.

Optionally, the transceiver module 1502 may include a receiving module and a sending module. The sending module is configured to implement a sending function of the measurement apparatus 1500, and the receiving module is configured to implement a receiving function of the measurement apparatus 1500.

Optionally, the measurement apparatus 1500 may further include a storage module, and the storage module stores a program or instructions. When the processing module executes the program or the instructions, the measurement apparatus 1500 is enabled to perform the method in FIG. 11 or FIG. 12.

It should be noted that the measurement apparatus 1500 may be a terminal device or a network device, may be a chip (system) or another component or assembly that may be disposed in a terminal device or a network device, or may be an apparatus that includes a terminal device or a network device. This is not limited in this application.

In addition, for technical effects of the measurement apparatus 1500, refer to technical effects of the method shown in any one of FIG. 7 to FIG. 12. Details are not described herein again.

For example, FIG. 16 is a diagram 2 of a structure of a measurement apparatus according to an embodiment of this application. The measurement apparatus may be a terminal device or a network device, or may be a chip (system) or another component or assembly that may be disposed in a terminal device or a network device. As shown in FIG. 16, a measurement apparatus 1600 may include a processor 1601. Optionally, the measurement apparatus 1600 may further include a memory 1602 and/or a transceiver 1603. The processor 1601 is coupled to the memory 1602 and the transceiver 1603, for example, may be connected through a communication bus.

The following specifically describes components of the measurement apparatus 1600 with reference to FIG. 16.

The processor 1601 is a control center of the measurement apparatus 1600, and may be one processor, or may be a general term of a plurality of processing elements. For example, the processor 1601 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1601 may perform various functions of the measurement apparatus 1600 by running or executing a software program stored in the memory 1602 and invoking data stored in the memory 1602.

During specific implementation, in an embodiment, the processor 1601 may include one or more CPUs such as a CPU 0 and a CPU 1 shown in FIG. 16.

During specific implementation, in an embodiment, the measurement apparatus 1600 may alternatively include a plurality of processors such as the processor 1601 and a processor 1604 shown in FIG. 2. Each of the processors may be a single-core processor (single-CPU) or a multicore processor (multi-CPU). The processor herein may be one or more devices, circuits, and/or processing cores configured to process data (for example, computer program instructions).

The memory 1602 is configured to store the software program for executing the solutions of this application, and the processor 1601 controls the execution. For a specific implementation, refer to the foregoing method embodiments. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of an instruction structure or a data structure and that can be accessed by a computer, but is not limited thereto. The memory 1602 may be integrated with the processor 1601, or may exist independently, and is coupled to the processor 1601 through an interface circuit (not shown in FIG. 16) of the measurement apparatus 1600. This is not specifically limited in this embodiment of this application.

The transceiver 1603 is configured to communicate with another measurement apparatus. For example, the measurement apparatus 1600 is a terminal device, and the transceiver 1603 may be configured to communicate with a network device or communicate with another terminal device. For another example, the measurement apparatus 1600 is a network device, and the transceiver 1603 may be configured to communicate with a terminal device or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the measurement apparatus 1600. This is not specifically limited in this embodiment of this application.

It should be noted that the structure of the measurement apparatus 1600 shown in FIG. 16 does not constitute a limitation on the measurement apparatus. An actual measurement apparatus may include more or fewer components than those shown in the figure, combine some components, or have different component arrangements.

In addition, for technical effects of the measurement apparatus 1600, refer to technical effects of the measurement method in the foregoing method embodiments. Details are not described herein again.

An embodiment of this application provides a communication system. The communication system includes a first device and a second device.

Optionally, the communication system may further include a third device.

An embodiment of this application provides a computer-readable storage medium. The computer-readable storage medium stores computer program code or instructions. When the computer program code or the instructions are run on a computer, the computer is enabled to perform the measurement method shown in any one of FIG. 3 and FIG. 4A and FIG. 4B or FIG. 7 to FIG. 12.

An embodiment of this application provides a computer program product. The computer program product includes computer program code or instructions. When the computer program code or the instructions are run on a computer, the computer is enabled to perform the measurement method shown in any one of FIG. 3 and FIG. 4A and FIG. 4B or FIG. 7 to FIG. 12.

It should be understood that the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware assembly, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing described system, apparatus, and unit, refer to corresponding processes in the foregoing method embodiments. Details are not described herein again.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A measurement method, wherein the method comprises:

   obtaining, by a first device, a $k^{th}$ first sensing result output by a first sensing neural network, wherein the first sensing neural network is used for a first sensing task, the $k^{th}$ first sensing result is determined based on measurement results of N measurement devices, the N measurement devices are obtained through selection from M measurement devices for k times based on a selection neural network, $1 \leq k \leq N < M$, and k, M, and N are positive integers;
   determining, by the first device, that a selection termination condition is not met;
   selecting, by the first device, L measurement devices based on the selection neural network and the $k^{th}$ first sensing result, wherein $1 \leq L < M$, and L is a positive integer; and
   obtaining, by the first device, a $(k+1)^{th}$ first sensing result output by the first sensing neural network, wherein the $(k+1)^{th}$ first sensing result is determined based on measurement results of the N measurement devices and the L measurement devices.

2. The method according to claim 1, wherein the selection neural network is deployed on the first device, and the first sensing neural network is deployed on a second device; and
   the obtaining, by a first device, a $k^{th}$ first sensing result output by a first sensing neural network comprises:
   receiving, by the first device, the $k^{th}$ first sensing result from the second device.

3. The method according to claim 1 or 2, wherein a measurement device selected by the first device at the $1^{st}$ time is determined based on the selection neural network, information about the M measurement devices, and task information of the first sensing task.

4. The method according to any one of claims 1 to 3, wherein the selection termination condition comprises one or more of the following:

accuracy of the $k^{th}$ first sensing result is greater than or equal to an accuracy threshold; or
a quantity of times for the first device to select a measurement device is greater than or equal to a quantity threshold of selection times.

5. The method according to any one of claims 1 to 4, wherein the selecting, by the first device, L measurement devices based on the selection neural network and the $k^{th}$ first sensing result comprises:

obtaining, by the first device, an $i^{th}$ second sensing result output by a second sensing neural network, wherein the second sensing neural network is used for a second sensing task, the $i^{th}$ second sensing result is determined based on measurement results of H measurement devices, the H measurement devices are obtained through selection from W measurement devices for i times based on the selection neural network, $1 \leq i \leq H < W$, and i, H, and W are positive integers; and
selecting, by the first device, the L measurement devices based on the selection neural network, the $i^{th}$ second sensing result, and the $k^{th}$ first sensing result.

6. The method according to claim 5, wherein the second sensing neural network is deployed on a third device; and the obtaining, by the first device, an $i^{th}$ second sensing result output by a second sensing neural network comprises: receiving, by the first device, the $i^{th}$ second sensing result from the third device.

7. The method according to any one of claims 1 to 6, further comprising:

obtaining, by the first device, a $j^{th}$ training sensing result and a $j^{th}$ reference sensing result that are output by a third sensing neural network, wherein the $j^{th}$ training sensing result is determined based on measurement results of Q training measurement devices, the Q training measurement devices are obtained through selection from S training measurement devices for j times based on the selection neural network, the $j^{th}$ reference sensing result is determined based on measurement results of R training measurement devices, the R training measurement devices are obtained through random selection from the S training measurement devices for j times, $1 < j \leq Q < S$, R=Q, and j, Q, R, and S are positive integers;
determining, by the first device, that a training termination condition is not met, wherein the training termination condition is used to terminate training on the selection neural network;
selecting, by the first device, T training measurement devices based on the selection neural network, the $j^{th}$ training sensing result, and the $j^{th}$ reference sensing result, wherein $1 \leq T < S$, and T is a positive integer; and
obtaining, by the first device, a $(j+1)^{th}$ training sensing result and a $(j+1)^{th}$ reference sensing result that are output by the third sensing neural network, wherein the $(j+1)^{th}$ training sensing result is determined based on measurement results of the Q training measurement devices and the T training measurement devices, the $(j+1)^{th}$ reference sensing result is determined based on measurement results of the R training measurement devices and P training measurement devices, the P training measurement devices are obtained through random selection from the S training measurement devices at a $(j+1)^{th}$ time, P=T, and P is a positive integer.

8. The method according to claim 7, wherein the selecting, by the first device, T training measurement devices based on the selection neural network, the $j^{th}$ training sensing result, and the $j^{th}$ reference sensing result comprises:

determining, by the first device based on the $j^{th}$ training sensing result and the $j^{th}$ reference sensing result, a $j^{th}$ reward value used for reinforcement learning; and
selecting, by the first device, the T training measurement devices based on the selection neural network, the $j^{th}$ training sensing result, and the $j^{th}$ reward value.

9. The method according to claim 8, wherein the determining, by the first device based on the $j^{th}$ training sensing result and the $j^{th}$ reference sensing result, a $j^{th}$ reward value used for reinforcement learning comprises: determining, by the first device based on a difference between sensing accuracy of the $j^{th}$ training sensing result and sensing accuracy of the $j^{th}$ reference sensing result, the $j^{th}$ reward value used for the reinforcement learning.

10. The method according to any one of claims 7 to 9, wherein the training termination condition comprises one or more of the following:

the $j^{th}$ reward value is greater than or equal to a reward value threshold;

a quantity of training times of the selection neural network is greater than or equal to a quantity threshold of training times; or

a loss value of the selection neural network is less than or equal to a loss value threshold.

**11.** The method according to any one of claims 7 to 10, wherein the third sensing neural network is deployed on a fourth device; and

the obtaining, by the first device, a $j^{th}$ training sensing result and a $j^{th}$ reference sensing result that are output by a third sensing neural network comprises:

receiving, by the first device, the $j^{th}$ training sensing result and the $j^{th}$ reference sensing result from the fourth device.

**12.** A measurement method, wherein the method comprises:

receiving, by a second device, measurement results from N measurement devices, wherein a first sensing neural network is deployed on the second device, the first sensing neural network is used for a first sensing task, the N measurement devices are obtained through selection from M measurement devices for k times based on a selection neural network, the selection neural network is deployed on a first device, $1 \leq k \leq N < M$, and k, M, and N are positive integers;

obtaining, by the second device, a $k^{th}$ first sensing result based on the first sensing neural network and the measurement results of the N measurement devices; and

sending, by the second device, the $k^{th}$ first sensing result to the first device.

**13.** The method according to claim 12, further comprising:

receiving, by the second device, a $k^{th}$ selection result from the first device, wherein the $k^{th}$ selection result indicates a measurement device selected by the first device at a $k^{th}$ time based on the selection neural network.

**14.** A measurement apparatus, wherein the apparatus comprises a processing module;

the processing module is configured to obtain a $k^{th}$ first sensing result output by a first sensing neural network, wherein the first sensing neural network is used for a first sensing task, the $k^{th}$ first sensing result is determined based on measurement results of N measurement devices, the N measurement devices are obtained through selection from M measurement devices for k times based on a selection neural network, $1 \leq k \leq N < M$, and k, M, and N are positive integers;

the processing module is further configured to determine that a selection termination condition is not met;

the processing module is further configured to select L measurement devices based on the selection neural network and the $k^{th}$ first sensing result, wherein $1 \leq L < M$, and L is a positive integer; and

the processing module is further configured to obtain a $(k+1)^{th}$ first sensing result output by the first sensing neural network, wherein the $(k+1)^{th}$ first sensing result is determined based on measurement results of the N measurement devices and the L measurement devices.

**15.** The apparatus according to claim 14, wherein the selection neural network is deployed on the apparatus, the first sensing neural network is deployed on a second device, and the apparatus further comprises a transceiver module, wherein

the transceiver module is configured to receive the $k^{th}$ first sensing result from the second device.

**16.** The apparatus according to claim 15, wherein a measurement device selected by the apparatus at the $1^{st}$ time is determined based on the selection neural network, information about the M measurement devices, and task information of the first sensing task.

**17.** The apparatus according to claim 16, wherein the selection termination condition comprises one or more of the following:

accuracy of the $k^{th}$ first sensing result is greater than or equal to an accuracy threshold; or

a quantity of times for the apparatus to select a measurement device is greater than or equal to a quantity threshold of selection times.

**18.** The apparatus according to claim 17, wherein the processing module is configured to:

obtain an $i^{th}$ second sensing result output by a second sensing neural network, wherein the second sensing neural network is used for a second sensing task, the $i^{th}$ second sensing result is determined based on measurement results of H measurement devices, the H measurement devices are obtained through selection from W measurement devices for i times based on the selection neural network, $1 \le i \le H < W$, and i, H, and W are positive integers; and

select the L measurement devices based on the selection neural network, the $i^{th}$ second sensing result, and the $k^{th}$ first sensing result.

19. The apparatus according to claim 18, wherein the second sensing neural network is deployed on a third device; and the transceiver module is further configured to receive the $i^{th}$ second sensing result from the third device.

20. The apparatus according to claim 19, wherein

the processing module is configured to obtain a $j^{th}$ training sensing result and a $j^{th}$ reference sensing result that are output by a third sensing neural network, wherein the $j^{th}$ training sensing result is determined based on measurement results of Q training measurement devices, the Q training measurement devices are obtained through selection from S training measurement devices for j times based on the selection neural network, the $j^{th}$ reference sensing result is determined based on measurement results of R training measurement devices, the R training measurement devices are obtained through random selection from the S training measurement devices for j times, $1 < j \le Q < S$, R=Q, and j, Q, R, and S are positive integers;

the processing module is further configured to determine that a training termination condition is not met, wherein the training termination condition is used to terminate training on the selection neural network;

the processing module is further configured to select T training measurement devices based on the selection neural network, the $j^{th}$ training sensing result, and the $j^{th}$ reference sensing result, wherein $1 \le T < S$, and T is a positive integer; and

the processing module is further configured to obtain a $(j+1)^{th}$ training sensing result and a $(j+1)^{th}$ reference sensing result that are output by the third sensing neural network, wherein the $(j+1)^{th}$ training sensing result is determined based on measurement results of the Q training measurement devices and the T training measurement devices, the $(j+1)^{th}$ reference sensing result is determined based on measurement results of the R training measurement devices and P training measurement devices, the P training measurement devices are obtained through random selection from the S training measurement devices at a $(j+1)^{th}$ time, P=T, and P is a positive integer.

21. The apparatus according to claim 20, wherein the processing module is configured to:

determine, based on the $j^{th}$ training sensing result and the $j^{th}$ reference sensing result, a $j^{th}$ reward value used for reinforcement learning; and

select the T training measurement devices based on the selection neural network, the $j^{th}$ training sensing result, and the $j^{th}$ reward value.

22. The apparatus according to claim 21, wherein the processing module is configured to:
determine, based on a difference between sensing accuracy of the $j^{th}$ training sensing result and sensing accuracy of the $j^{th}$ reference sensing result, the $j^{th}$ reward value used for the reinforcement learning.

23. The apparatus according to any one of claims 20 to 22, wherein the training termination condition comprises one or more of the following:

the $j^{th}$ reward value is greater than or equal to a reward value threshold;
a quantity of training times of the selection neural network is greater than or equal to a quantity threshold of training times; or
a loss value of the selection neural network is less than or equal to a loss value threshold.

24. The apparatus according to any one of claims 20 to 23, wherein the third sensing neural network is deployed on a fourth device; and
the transceiver module is configured to receive the $j^{th}$ training sensing result and the $j^{th}$ reference sensing result from the fourth device.

25. A measurement apparatus, wherein the apparatus comprises a transceiver module and a processing module;

the transceiver module is configured to receive measurement results from N measurement devices, wherein a first sensing neural network is deployed on the apparatus, the first sensing neural network is used for a first sensing task, the N measurement devices are obtained through selection from M measurement devices for k times based on a selection neural network, the selection neural network is deployed on a first device, $1 \leq k \leq N < M$, and k, M, and N are positive integers;

the processing module is configured to obtain a $k^{th}$ first sensing result based on the first sensing neural network and the measurement results of the N measurement devices; and

the transceiver module is further configured to send the $k^{th}$ first sensing result to the first device.

26. The apparatus according to claim 25, wherein the transceiver module is further configured to receive a $k^{th}$ selection result from the first device, wherein the $k^{th}$ selection result indicates a measurement device selected by the first device at a $k^{th}$ time based on the selection neural network.

27. A measurement apparatus, comprising a processor, wherein the processor is coupled to a memory; and the processor is configured to execute a computer program stored in the memory, to enable the apparatus to perform the measurement method according to any one of claims 1 to 13.

28. A computer-readable storage medium, wherein the computer-readable storage medium stores a computer program or instructions, and when the computer program or the instructions are run on a computer, the computer is enabled to perform the measurement method according to any one of claims 1 to 13.

29. A computer program product, wherein the computer program product comprises a computer program or instructions, and when the computer program or the instructions are run on a computer, the computer is enabled to perform the measurement method according to any one of claims 1 to 13.

30. A communication system, comprising the measurement apparatus according to any one of claims 14 to 24 and the measurement apparatus according to claim 25 or 26.

FIG. 1

FIG. 2

S301: A first device obtains a $j^{th}$ training sensing result and a $j^{th}$ reference sensing result that are output by a third sensing neural network

S302: The first device determines that a training termination condition is not met

S303: The first device selects T training measurement devices based on a selection neural network, the $j^{th}$ training sensing result, and the $j^{th}$ reference sensing result

S304: The first device randomly selects P training measurement devices

S305: The first device obtains the $j^{th}$ training sensing result and the $j^{th}$ reference sensing result that are output by the third sensing neural network

FIG. 3

| First device | S training measurement devices | Fourth device |
|---|---|---|

S401: j<sup>th</sup> training sensing result and j<sup>th</sup> reference sensing result

S402: Determine whether a training termination condition is met

Yes

S412: Terminate training on the selection neural network

No

S403: Select T training measurement devices based on a selection neural network, the j<sup>th</sup> training sensing result, and the j<sup>th</sup> reference sensing result

S404: Randomly select P training measurement devices

S405: Send measurement indication information to the T training measurement devices

TO FIG. 4B

FIG. 4A

CONT. FROM FIG. 4A

S406: Send the measurement indication information to the P training measurement devices

S407: Measurement results of Q training measurement devices and the T training measurement devices

S408: Measurement results of R training measurement devices and the P training measurement devices

S409: Obtain a $(j+1)^{th}$ training sensing result based on a third sensing neural network and the measurement results of the Q training measurement devices and the T training measurement devices

S410: Obtain a $(j+1)^{th}$ reference sensing result based on the third sensing neural network and the measurement results of the R training measurement devices and the P training measurement devices

S411: $(j+1)^{th}$ training sensing result and $(j+1)^{th}$ reference sensing result

FIG. 4B

Reward value

First device

Selection neural network

Action

Environment

Current state

FIG. 5

Real image → Loss value calculation → Loss value 1

Real image → Loss value calculation → Loss value 2

Real image → Loss value calculation → Loss value 3

Reconstruction image 1

Reconstruction image 2

Reconstruction image 3

Second CNN

Feature D1

Feature D2

Feature D3

Feature C1

Feature C2

Feature C3

Feature A1 — Feature B1

Feature A2 — Feature B2

Feature A3 — Feature B3

First MLP / First CNN

First MLP / First CNN

First MLP / First CNN

Location information and scenario scale of a training measurement device 1

Channel measurement data of the training measurement device 1

Location information and scenario scale of a training measurement device 2

Channel measurement data of the training measurement device 2

Location information and scenario scale of a training measurement device 3

Channel measurement data of the training measurement device 3

FIG. 6

S701: A first device obtains a $k^{th}$ first sensing result output by a first sensing neural network

↓

S702: The first device determines that a selection termination condition is not met

↓

S703: The first device selects L measurement devices based on a selection neural network and the $k^{th}$ first sensing result

↓

S704: The first device obtains a $(k+1)^{th}$ first sensing result output by the first sensing neural network

FIG. 7

FIG. 8

FIG. 9

```
┌─────────────────────┐                          ┌─────────────────────┐
│     First device    │                          │    M measurement    │
│                     │                          │       devices       │
└─────────────────────┘                          └─────────────────────┘
           │                                                 │
┌──────────────────────────────────┐                         │
│ S1001: Obtain a k^th first sensing│                         │
│ result output by a first sensing  │                         │
│ neural network                    │                         │
└──────────────────────────────────┘                         │
           │                                                 │
        ╱─────────────╲          Yes    ┌──────────────────┐ │
      ╱   S1002:         ╲──────────────▶│ S1007: Terminate │ │
     ⟨ Determine whether a ⟩             │ selection on a   │ │
      ╲ selection termination          │ measurement device│ │
        ╲ condition is met ╱            └──────────────────┘ │
        ╲─────────────╱                                      │
           │ No                                              │
┌──────────────────────────────────┐                         │
│ S1003: Select L measurement       │                         │
│ devices based on a selection      │                         │
│ neural network and the k^th       │                         │
│ first sensing result              │                         │
└──────────────────────────────────┘                         │
           │                                                 │
           │ S1004: Send measurement indication              │
           │ information to the L measurement devices         │
           │ ──────────────────────────────────────────────▶ │
           │                                                 │
           │ S1005: Measurement results of the L             │
           │ measurement devices and N                       │
           │ measurement devices                             │
           │ ◀────────────────────────────────────────────── │
┌──────────────────────────────────┐                         │
│ S1006: Obtain a (k+1)^th first    │                         │
│ sensing result based on the first │                         │
│ sensing neural network and the    │                         │
│ measurement results of the N      │                         │
│ measurement devices and the L     │                         │
│ measurement devices               │                         │
└──────────────────────────────────┘                         │
           │                                                 │
```

FIG. 10

First device     M measurement devices     Second device

S1101: $k^{th}$ first sensing result

S1108: Terminate selection on a measurement device   Yes ← S1102: Determine whether a selection termination condition is met

No

S1103: Select L measurement devices based on a selection neural network and the $k^{th}$ first sensing result

S1104: Send measurement indication information to the L measurement devices

S1105: Measurement results of the L measurement devices and N measurement devices

S1106: Determine a $(k+1)^{th}$ first sensing result based on a first sensing neural network and the measurement results of the N measurement devices and the L measurement devices

S1107: $(k+1)^{th}$ first sensing result

FIG. 11

| Third device | First device | M measurement devices | Second device |
|---|---|---|---|

S1201: $k^{th}$ first sensing result

S1202: $i^{th}$ second sensing result

S1203: Determine that a selection termination condition is not met

S1204: Select L measurement devices based on a selection neural network, the $k^{th}$ first sensing result, and the $i^{th}$ second sensing result

S1205: Send measurement indication information to the L measurement devices

S1206: Measurement results of the L measurement devices and N measurement devices

S1207: Obtain a $(k+1)^{th}$ first sensing result based on a first sensing neural network and the measurement results of the N measurement devices and the L measurement devices

S1208: $(k+1)^{th}$ first sensing result

FIG. 12

FIG. 13

FIG. 14

Measurement apparatus 1500

Processing module

1501 1502

Transceiver module

FIG. 15

Measurement apparatus 1600

1601

Processor

CPU 0

CPU 1

1604

Processor

CPU 0

CPU 1

1602

Memory

1603

Transceiver

FIG. 16

## INTERNATIONAL SEARCH REPORT

| International application No. |
| --- |
| **PCT/CN2023/091408** |

| | |
| --- | --- |
| **A.** | **CLASSIFICATION OF SUBJECT MATTER** |
| | H04B17/382(2015.01)i; G06N3/02(2006.01)i; H04W 48/18(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

  IPC:H04,G06N

Documentation searched other than minimum documentation to the extent that such documents are included in the fields searched

Electronic data base consulted during the international search (name of data base and, where practicable, search terms used)

  CNABS, CNTXT, DWPI, ENTXT, ENTXTC, VEN, CNKI: 测量, 传感, 感知, 选择, 神经网络, 学习, 训练, 增量, 增加, 合并, 合作, 协同, 协作, 融合, measure, sense, sensor, select, neural network, learn, train, increment, increase, cooperative, fusion, merge

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 110809306 A (UNIVERSITY OF ELECTRONIC SCIENCE AND TECHNOLOGY OF CHINA) 18 February 2020 (2020-02-18) <br> description, paragraphs 39-91, and figures 1-2 | 12-13, 25-26 |
| A | CN 114330467 A (HUAWEI TECHNOLOGIES CO., LTD.) 12 April 2022 (2022-04-12) <br> entire document | 1-30 |
| A | CN 111245540 A (HUNAN UNIVERSITY OF SCIENCE AND ENGINEERING) 05 June 2020 (2020-06-05) <br> entire document | 1-30 |
| A | CN 109039502 A (ARMY ENGINEERING UNIVERSITY OF PLA) 18 December 2018 (2018-12-18) <br> entire document | 1-30 |
| A | CN 113727420 A (CHONGQING UNIVERSITY OF POSTS AND TELECOMMUNICATIONS) 30 November 2021 (2021-11-30) <br> entire document | 1-30 |

☑ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 July 2023** | **18 July 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/091408** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 10627823 B1 (STRADVISION, INC.) 21 April 2020 (2020-04-21)<br>entire document | 1-30 |

Form PCT/ISA/210 (second sheet) (July 2022)

<div align="center">

**INTERNATIONAL SEARCH REPORT**
**Information on patent family members**

</div>

| International application No. |
| --- |
| **PCT/CN2023/091408** |

| Patent document cited in search report | | | Publication date (day/month/year) | Patent family member(s) | | | Publication date (day/month/year) |
| --- | --- | --- | --- | --- | --- | --- | --- |
| CN | 110809306 | A | 18 February 2020 | CN | 110809306 | B | 16 March 2021 |
| CN | 114330467 | A | 12 April 2022 | | None | | |
| CN | 111245540 | A | 05 June 2020 | CN | 111245540 | B | 01 March 2022 |
| CN | 109039502 | A | 18 December 2018 | | None | | |
| CN | 113727420 | A | 30 November 2021 | | None | | |
| US | 10627823 | B1 | 21 April 2020 | KR | 20200094641 | A | 07 August 2020 |
| | | | | KR | 102325028 | B1 | 12 November 2021 |
| | | | | EP | 3690711 | A1 | 05 August 2020 |
| | | | | JP | 2020123335 | A | 13 August 2020 |
| | | | | JP | 6913969 | B2 | 04 August 2021 |
| | | | | CN | 111507372 | A | 07 August 2020 |
| | | | | IN | 202044001771 | A | 31 July 2020 |

Form PCT/ISA/210 (patent family annex) (July 2022)

**REFERENCES CITED IN THE DESCRIPTION**

**Patent documents cited in the description**

- CN 202210504323